# EUROPEAN PATENT SPECIFICATION

(11) **EP 2 940 556 B1**
(45) Date of publication and mention of the grant of the patent: **08.06.2022**
(21) Application number: 15165531.3
(22) Date of filing: 28.04.2015
(51) Int. Cl.: G06F 3/01, G06F 3/16, G10L 15/22, G06F 9/44, G06F 3/03

(54) **COMMAND DISPLAYING METHOD AND COMMAND DISPLAYING DEVICE**
BEFEHLSANZEIGEVERFAHREN UND BEFEHLSANZEIGEVORRICHTUNG
PROCÉDÉ D'AFFICHAGE DE COMMANDE ET COMMANDE D'UN DISPOSITIF D'AFFICHAGE

(30) Priority: 30.04.2014 KR 20140052923
(43) Date of publication of application: 04.11.2015
(73) Proprietor: Samsung Electronics Co., Ltd., Gyeonggi-do 443-742 (KR)
(72) Inventor: Sholudko, Oleksandr, 443-742 Gyeonggi-do (KR); Khomyakov, Oleksandr, 443-742 Gyeonggi-do (KR); Kupchanko, Stanislav, 443-742 Gyeonggi-do (KR); Liashchenko, Ievgen, 443-742 Gyeonggi-do (KR)
(74) Representative: HGF

(56) References cited:
- EP-A1- 1 555 608
- EP-A1- 2 959 361
- US-A1- 2013 050 432
- US-A1- 2013 069 985

## Description

### TECHNICAL FIELD

The present disclosure relates to a device and method for displaying a text corresponding to a command.

### BACKGROUND

As technologies for electronic components develop, electronic devices also develop into various types of wearable devices such as an electronic necklace, an electronic accessory, an electronic tattoo, electronic glasses, a Head Mounted Device (HMD), and an electronic contact lens while providing various applications and functions related to the electronic devices. Furthermore, the electronic devices may acquire various user inputs and provide applications corresponding to the user inputs. For example, an electronic device may acquire a touch input of the user through a touch screen. The electronic device also may acquire (e.g. be responsive to) a gesture input of the user through a camera or an infrared ray sensor. The electronic device also may acquire an input obtained by moving the electronic device by the user through a motion detection sensor (for example, an acceleration sensor or a gyro sensor). The electronic device also may acquire a voice input of the user through an audio input unit. The electronic device also may acquire an input based on a change in a surrounding magnetic force through a magnetic sensor. The electronic device may provide an application, function, etc. provided by the electronic device, based on at least one or a combination of various inputs.

US patent application publication number 2013/0069985 A1 describes a wearable computing device including a head-mounted display (HMD) that superimposes images over a user's field of view and provides information relating to target devices within the field of view.

European patent application having publication number EP 1 555 608 A1 describes a system of speech operation of an electronic device, in particular in a vehicle. Voice commands are used to select operating functions that are displayed as text in a display unit.

US patent application publication number 2013/0050432 A1 describes a method of enhancing the experience of a user wearing a see-through mixed reality display.

The above information is presented as background information only to assist with an understanding of the present disclosure. No determination has been made, and no assertion is made, as to whether any of the above might be applicable as prior art with regard to the present disclosure.

It is an aim of certain embodiments of the invention to solve, mitigate or obviate, at least partly, at least one of the problems and/or disadvantages associated with the prior art. Certain embodiments aim to provide at least one of the advantages described below.

### SUMMARY

Various respective aspects and features of the invention are defined in the appended claims. Combinations of features from the dependent claims may be combined with features of the independent claims as appropriate and not merely as explicitly set out in the claims.

According to the technologies of the related art, an electronic device may acquire a voice input of a user, and provide an application, function, etc. corresponding to the acquired voice input. As applications and functions provided by the electronic device are diversified, it may be difficult for the user to recognize a voice command for performing an application, function, etc. intended by the user. For example, an electronic device may provide over 100 applications or functions, so it is could be impossible (or at least difficult) for the user to recognize all voice commands corresponding to the applications or functions provided by the electronic device. Further, a voice command may not be used unless an interface for separately indicating a voice command is provided.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

Embodiments of the invention will now be described, by way of example only, with reference to the accompanying drawings in which:
FIG. 1 is illustrates a network environment including an electronic device according to various embodiments of the present disclosure;
FIG. 2 illustrates a block diagram of an electronic device according to various embodiments of the present disclosure;
FIG. 3 illustrates an example of displaying at least one text in relation to an external object by an electronic device according to various embodiments of the present disclosure;
FIG. 4 is a flowchart schematically illustrating external object recognition as part of a voice command providing method for an electronic device according to various embodiments of the present disclosure;
FIG. 5 is a flowchart schematically illustrating a voice command providing method for an electronic device according to various embodiments of the present disclosure;
FIG. 6 illustrates an example of providing a function based on an attribute of a voice command by an electronic device according to various embodiments of the present disclosure;
FIGS. 7A and 7B illustrate examples of displaying information related to an external object by an electronic device according to various embodiments of the present disclosure;
FIGS. 8A and 8B illustrate examples of displaying information related to an external object by an electronic device according to various embodiments of the present disclosure;
FIG. 9 illustrates an example of displaying information related to an external object by an electronic device according to various embodiments of the present disclosure;
FIG. 10 illustrates an example of displaying information related to an external object by an electronic device according to various embodiments of the present disclosure;
FIG. 11 illustrates a block diagram of an electronic device according to various embodiments of the present disclosure; and
FIG. 12 illustrates communication protocols between a plurality of electronic devices according to various embodiments of the present disclosure.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications and various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure as define by the claims. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

The terms "include" or "may include" which may be used in describing various embodiments of the present disclosure refer to the existence of a corresponding disclosed function, operation or component which can be used in various embodiments of the present disclosure and do not limit one or more additional functions, operations, or components. In various embodiments of the present disclosure, the terms such as "include" or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

In various embodiments of the present disclosure, the expression "or" or "at least one of A or/and B" includes any or all of combinations of words listed together. For example, the expression "A or B" or "at least A or/and B" may include A, may include B, or may include both A and B.

The expressions "1", "2", "first", or "second" used in various embodiments of the present disclosure may modify various components of the various embodiments but do not limit the corresponding components. For example, the above expressions do not limit the sequence and/or importance of the components. The expressions may be used for distinguishing one component from other components. For example, a first user device and a second user device indicate different user devices although both of them are user devices. For example, without departing from the scope of the present disclosure, a first structural element may be referred to as a second structural element. Similarly, the second structural element also may be referred to as the first structural element.

When it is stated that a component is "coupled to" or "connected to" another component, the component may be directly coupled or connected to another component or a new component may exist between the component and another component. In contrast, when it is stated that a component is "directly coupled to" or "directly connected to" another component, a new component does not exist between the component and another component.

The terms used in describing various embodiments of the present disclosure are only examples for describing a specific embodiment but do not limit the various embodiments of the present disclosure. Singular forms are intended to include plural forms unless the context clearly indicates otherwise.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present description.

An electronic device according to various embodiments of the present disclosure may be a device including a projection function. For example, the electronic device may be one or a combination of a smart phone, a tablet Personal Computer (PC), a mobile phone, a video phone, an e-book reader, a desktop PC, a laptop PC, a netbook computer, a Personal Digital Assistant (PDA), a camera, a wearable device (for example, a Head-Mounted-Device (HMD)) such as electronic glasses, electronic clothes, and electronic bracelet, an electronic necklace, an electronic appcessary (e.g. physical device and counterpart application for a mobile device), an electronic tattoo, and a smart watch.

According to various embodiments of the present disclosure, the electronic device may be a smart home appliance having a projection function. The smart home appliance may include at least one of a Television (TV), a Digital Video Disc (DVD) player, an audio player, an air conditioner, a cleaner, an oven, a microwave oven, a washing machine, an air cleaner, a set-top box, a TV box (for example, Samsung HomeSync^{™}, Apple TV^{™}, or Google TV^{™}), game consoles, an electronic dictionary, an electronic key, a camcorder, and an electronic frame.

According to various embodiments of the present disclosure, the electronic device may include at least one of various types of medical devices (for example, Magnetic Resonance Angiography (MRA), Magnetic Resonance Imaging (MRI), Computed Tomography (CT), a scanner, an ultrasonic device and the like), a navigation device, a Global Positioning System (GPS) receiver, an Event Data Recorder (EDR), a Flight Data Recorder (FDR), a vehicle infotainment device, electronic equipment for a ship (for example, a navigation device for ship, a gyro compass and the like), avionics, a security device, a head unit for a vehicle, an industrial or home robot, an Automatic Teller Machine (ATM) of financial institutions, and a Point Of Sale (POS) device of shops.

According to various embodiments of the present disclosure, the electronic device may include at least one of furniture or a part of a building/structure, an electronic board, an electronic signature receiving device, a projector, and various types of measuring devices (for example, a water meter, an electricity meter, a gas meter, a radio wave meter, and the like) including a projection function. The electronic device according to various embodiments of the present disclosure may be one or a combination of the above described various devices. Further, the electronic device according to various embodiments of the present disclosure may be a flexible device. It is apparent to those skilled in the art that the electronic device according to various embodiments of the present disclosure is not limited to the above described devices.

Hereinafter, an electronic device according to various embodiments of the present disclosure will be described with reference to the accompanying drawings. The term "user" used in various embodiments may refer to a person who uses an electronic device or a device (for example, an artificial intelligence electronic device) which uses an electronic device.

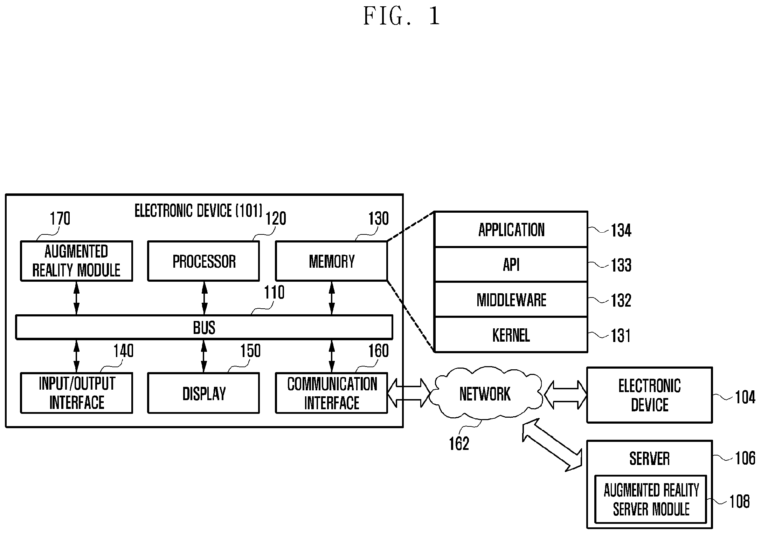

FIG. 1 illustrates a network environment including an electronic device according to various embodiments of the present disclosure.

Referring to FIG. 1, the electronic device 101 includes a bus 110, a processor 120, a memory 130, an input/output interface 140, a display 150, a communication interface 160, and an augmented reality module 170.

The bus 110 may be a circuit connecting the above described components and transmitting communication (for example, a control message) between the above described components.

The processor 120 receives commands from other components (for example, the memory 130, the input/output interface 140, the display 150, the communication interface 160, or the augmented reality module 170) through the bus 110, analyzes the received commands, and executes calculation or data processing according to the analyzed commands.

The memory 130 stores commands or data received from the processor 120 or other components (for example, the input/output interface 140, the display 150, the communication interface 160, or the augmented reality module 170) or generated by the processor 120 or other components. The memory 130 may include programming modules, for example, a kernel 131, middleware 132, an Application Programming Interface (API) 133, and an application 134. Each of the aforementioned programming modules may be implemented by software, firmware, hardware, or a combination of two or more thereof.

The kernel 131 controls or manages system resources (for example, the bus 110, the processor 120, or the memory 130) used for executing an operation or function implemented by the remaining other programming modules, for example, the middleware 132, the API 133, or the application 134. Further, the kernel 131 provides an interface for accessing individual components of the electronic device 101 from the middleware 132, the API 133, or the application 134 to control or manage the components.

The middleware 132 performs a relay function of allowing the API 133 or the application 134 to communicate with the kernel 131 to exchange data. Further, in operation requests received from the application 134, the middleware 132 performs a control for the operation requests (for example, scheduling or load balancing) by using a method of assigning a priority, by which system resources (for example, the bus 110, the processor 120, the memory 130 and the like) of the electronic device 101 can be used, to the application 134.

The API 133 is an interface by which the application 134 can control a function provided by the kernel 131 or the middleware 132 and includes, for example, at least one interface or function (for example, command) for a file control, a window control, image processing, or a character control.

According to various embodiments of the present disclosure, the application 134 may include a Short Message Service (SMS)/Multimedia Messaging Service (MMS) application, an email application, a calendar application, an alarm application, a health care application (for example, application measuring quantity of exercise or blood sugar) or an environment information application (for example, application providing information on barometric pressure, humidity or temperature). Additionally or alternatively, the application 134 may be an application related to an information exchange between the electronic device 101 and an external electronic device (for example, an electronic device 104). The external electronic device is an example of an external object. In some embodiments the external object is an electronic device but in other embodiments the external object is, for example a building or a person (real object). In other embodiments the external object may be a virtual object such as an electronic file such as a text file or an image file. The application related to the information exchange may include, for example, a notification relay application for transferring particular information to the external electronic device or a device management application for managing the external electronic device.

For example, the notification relay application may include a function of transmitting notification information generated by another application (for example, an SMS/MMS application, an email application, a health care application or an environment information application) of the electronic device 101 to the external electronic device (for example, the electronic device 104). Additionally or alternatively, the notification relay application may receive notification information from, for example, the external electronic device 104 and provide the received notification information to the user. The device management application may manage (for example, install, remove, or update) at least a part of a function (for example, turning on/off the external electronic device (or some components of the external electronic device) or controlling a brightness of the display) of the external electronic device 104 communicating with the electronic device 101, an application executed in the external electronic device 104, or a service (for example, a call service, a message service, etc.) provided by the external electronic device 104.

According to various embodiments of the present disclosure, the application 134 may include an application designated according to an attribute (for example, a type of electronic device) of the external electronic device 104. For example, when the external electronic device 104 is an MP3 player, the application 134 may include an application related to music reproduction. Similarly, when the external electronic device 104 is a mobile medical device, the application 134 may include an application related to health care. According to an embodiment of the present disclosure, the application 134 may include at least one of an application designated to the electronic device 101 and an application received from an external electronic device (for example, a server 106 or the electronic device 104).

The input/output interface 140 transmits a command or data input from the user through an input/output device (for example, a sensor, a keyboard, or a touch screen) to the processor 120, the memory 130, the communication interface 160, or the augmented reality module 170 through, for example, the bus 110. For example, the input/output interface 140 may provide data of a user's touch input through a touch screen to the processor 120. Further, the input/output interface 140 may output a command or data received, through, for example, the bus 110, from the processor 120, the memory 130, the communication interface 160, or the augmented reality module 170 through the input/output device (for example, a speaker or a display). For example, the input/output interface 140 may output voice data processed through the processor 120 to the user through the speaker.

The display 150 displays various pieces of information (for example, multimedia data, text data, or the like) for the user.

The communication interface 160 connects communication between the electronic device 101 and the external device (for example, the electronic device 104 or the server 106). For example, the communication interface 160 may access a network 162 through wireless or wired communication to communicate with the external device. The wireless communication includes at least one of, for example, WiFi, BlueTooth (BT), Near Field Communication (NFC), a GPS, and cellular communication (for example, long term evolution (LTE), LTE advanced (LTE-A), code division multiple access (CDMA), wideband CDMA (WCDMA), universal mobile telecommunications system (UMTS), wireless broadband (WiBro) or global system for mobile (GSM)). The wired communication may include at least one of, for example, a Universal Serial Bus (USB), a High Definition Multimedia Interface (HDMI), Recommended Standard 232 (RS-232), and a Plain Old Telephone Service (POTS).

According to an embodiment of the present disclosure, the network 162 may be a telecommunication network. The telecommunication network includes at least one of a computer network, the Internet, an Internet of things, and a telephone network. According to an embodiment, a protocol (for example, transport layer protocol, data link layer protocol, or physical layer protocol) for communication between the electronic device 101 and the external device may be supported by at least one of the application 134, the application programming interface 133, the middleware 132, the kernel 131, and the communication interface 160.

According to an embodiment of the present disclosure, the server 106 may support operations of the electronic device 101 by executing at least one of the operations (or functions) performed in the electronic device 101. For example, the server 106 may include an augmented reality server module 108 that supports the augmented reality module 170 of the electronic device 101. For example, the augmented reality server module 108 may include at least one element of the augmented reality module 170 and execute (e.g., act as a proxy) at least one of the operations performed by the augmented reality module 170.

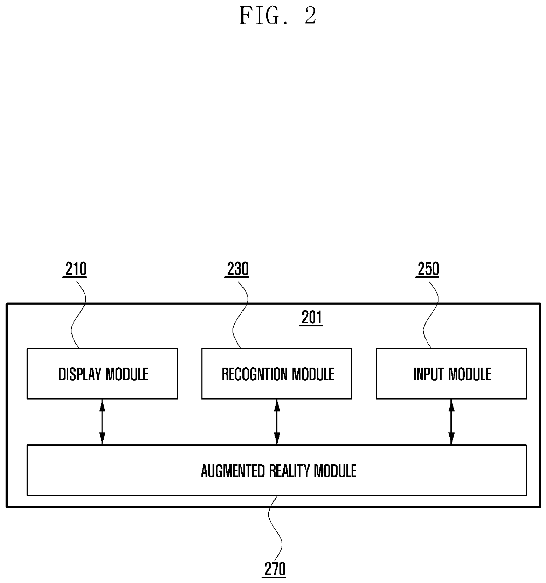

The augmented reality module 170 processes at least one of information elements acquired by other constituent elements (for example, a processor 120, a memory 130, an input/output interface 140, and a communication interface 160), and may provide the processed information elements to the user in various methods. In the invention, the augmented reality module 170 recognizes (e.g. via a sensor and/or a wireless communication protocol) an external object for an electronic device 101, using the processor 120 or independently from the processor 120, and displays at least one text related to the external object through a display 150. In response to a voice command acquired through the input/output interface 140 (for example, a microphone), the augmented reality module 170 provides an application, function, etc. corresponding to the at least one text when the voice command corresponding to the at least one text is received. Additional information on the augmented reality module 170 is provided through FIG. 2.

FIG. 2 illustrates a block diagram of an electronic device, such as an electronic device of FIG. 1, according to various embodiments of the present invention.

Referring to FIG. 2, the electronic device 201 includes a display module 210, a recognition module 230, an input module 250, and an augmented reality module 270. According to an embodiment of the present disclosure, the display module 210, the recognition module 230, the input module 250, and the augmented reality module 270 may include software (for example, a programming module), hardware (for example, an integrated circuit (IC)), or a combination thereof. Referring to FIG. 2, although the display module 210, the recognition module 230, the input module 250, and the augmented reality module 270 are indicated by separate blocks, each of the display module 210, the recognition module 230, the input module 250, and the augmented reality module 270 may constitute one module with at least some of the functionality of two or more of the individual modules combined.

The display module 210 controls a display (for example, the display 150) functionally connected to the electronic device such that the display displays information to the user. According to an embodiment of the present disclosure, at least a part of the display module 210 may be the input/output interface 140. For example, the display module 210 may visually output information through the display. In the invention, the display module 210 controls the display to display information (for example, a text, an image, etc.) related to the external device associated with the electronic device 201. According to an embodiment of the present disclosure, at least a part of the display module 210 may be, for example, a graphic processor. According to an embodiment of the present disclosure, at least a part of the display module 210 may be a part of a logic performed by a general processor (for example, the processor 120).

The recognition module 230 recognizes an external object for the electronic device 201. According to various embodiments of the present disclosure, the recognition module 230 may recognize an external object, based on information acquired through at least one of a short-range communication module (for example, an NFC, a radio frequency identification (RFID), a BT, etc.), a sensor module (for example, a magnetic sensor, a body sensor, etc.), and a camera module functionally connected to the electronic device 201. According to an embodiment of the present invention, for example, when the external object is another electronic device (for example, an object or device aving an NFC tag an RFID tag, etc.) including an NFC or an RFID, the recognition module 230 may acquire identification information (for example, an identifier) of the external object, and may recognize the external object or perform a communication for obtaining additional information related to the external object based on the acquired identification information. According to an embodiment of the present disclosure, for example, when the external object is another electronic device (for example, the electronic device 104, an Access Point (AP), etc.) that transmits information on the external object using a message such as a beacon, an advertisement, or a discovery through a short-range communication network, the recognition module 230 may recognize the external object based on information (for example, device information, manufacturer information, address information, etc.) of the message received from the external object.

According to an embodiment of the present disclosure, when the external object is magnetized, the recognition module 230 may detect information (for example, an approach, a location, etc. of the external object) through a sensor module (for example, a geomagnetic sensor, a magnetic sensor, etc.), and may recognize the external object based on the detected information. Alternatively, the recognition module 230 may acquire at least one image, which includes at least a port of the external object or identification information (for example, a Quick Response (QR) code, a barcode, etc.) on the external object, through a camera module, and may recognize the external object based on identification information of the acquired image. Alternatively, the recognition module 230 may acquire at least one image including the external object through a camera module. The recognition module 230 may acquire a contour feature of the external object included in the acquired image by performing image processing to the acquired image, and may recognize the external object by analyzing (for example, face recognition, optical letter reading, etc.) the acquired contour feature of the external object. Alternatively, the recognition module 230 may recognize the external object (for example, a designated user, the left eye, the right eye, the index finger, the middle finger, etc. of the designated user) based on body information acquired through a sensor module (for example, a fingerprint sensor, an iris sensor, etc.).

According to an embodiment of the present disclosure, the recognition module 230 may acquire additional information associated with the recognized external object from at least one of a memory (for example, the memory 130) functionally connected to the electronic device 201 and an external device (for example, the electronic device 104, the server 106, etc.) for the electronic device 201. For example, the recognition module 230 may acquire information on at least one of at least one text (for example, a text corresponding to an identifier, a function, etc.), a location of the display where at least one text will be displayed, a location (for example, GPS information) of the external object, an application, function, etc. associated with the external object, an image associated with the external object, and an attribute (for example, a size, a color, etc.) with which information is displayed on a display. According to an embodiment of the present invention, the external object may include at least one of a virtual object (for example, an image, a data file, an icon, etc. output through the display module 210) and a real object (for example, another device around the electronic device 201).

The input module 250 may acquire a voice command based on at least one audio information element. According to an embodiment of the present disclosure, at least a part of the input module 250 may be the input/output interface 140. For example, the input module 250 may acquire audio information (for example, an audio file, an audio signal, etc.) from at least one of a functionally connected audio input unit (for example, a microphone) and an external device (for example, the electronic device 104, the server 106, etc.) for the electronic device 201. The input module 250 may acquire a voice command based on the acquired audio information, for example, by analyzing the audio information. According to an embodiment of the present disclosure, the input module 250 may preprocess the acquired audio information to increase quality of the audio information. The preprocessing may be, for example, an Adaptive Echo cancellation (AED), an End-Point Detection (EPD), a Noise Suppression (NS), etc., or a combination of two or more thereof.

According to an embodiment of the present disclosure, the input module 250 may analyze audio information based on various voice recognition algorithms such as linear predictive coding, a source-filter model of a speech production, template matching, dynamic time warping, a hidden Markov model, and an artificial nerve network. According to an embodiment of the present disclosure, the input module 250 may analyze the audio information in units of a designated time period (for example, 0.5 seconds, 1 seconds, etc.), and may determine an attribute of the audio information. Additionally or alternatively, the input module 250 may divide sections (for example, between phonemes, between syllables, between words, etc.) in which the sizes of sounds are maintained in a range or more to determine the attribute of the audio information. According to an embodiment of the present disclosure, the input module 250 may acquire a voice command using at least one external device. For example, the input module 250 may transmit the audio information to the at least one external device (for example, a server) through a communication interface, and the at least one external device may analyze the audio information and transmit the analyzed information to the input module 250. The input module 250 may acquire a voice command or an attribute of a voice command based on the analyzed information.

The augmented reality module 270 functionally connected to the display module 210, the recognition module 230, and the input module 250 may control the display module 210, the recognition module 230, and the input module 250. According to the invention the augmented reality module 270 recognizes the external object for the electronic device 201 through the recognition module 230, 2. displays at least one text (for example, a text corresponding to an identifier, a function, etc.) related to the external object through the display module 210, may acquire a voice command corresponding to the at least one text through the input module 250, and may provide an application, function, etc. related to the external object in response to the voice command.

According to an embodiment of the present disclosure, the augmented reality module 270 may determine at least one text that will be displayed in relation to the external object, based on information associated with the external object. For example, the augmented reality module 270 may determine at least one of an identifier (for example, the name of a manufacturer, the name of a device, an address, a name of a person, etc.) for the external object, a text (for example, photographing, enlargement, reduction, etc.) corresponding to an application, function, etc., and information (for example, contents of a massage, a schedule, a task, a phone number, time, etc.) for the external object as the at least one text that will be displayed. For example, the augmented reality module 270 may determine an image related to the external object, which will be displayed together with the at least one text. According to an embodiment of the present disclosure, the augmented reality module 270 may display an identifier corresponding to the external object through the display module 210. For example, the augmented reality module 270 may display an identifier corresponding to the external object as at least a part of the at least one text related to the external object. For example, when the external object is a monitor, the augmented reality module 270 may acquire an identifier (for example, a monitor) corresponding to the monitor through the recognition module 230. The augmented reality module 270 may display an identifier corresponding to the monitor through the display module 210. According to an embodiment of the present disclosure, the augmented reality module 270 may display the identifier corresponding to the monitor as at least one of a text and an image form or a combination thereof.

According to an embodiment of the present disclosure, when the external object is a monitor and power-on and power-off are recognized as functions related to the monitor, the augmented reality module 270 may display the monitor, power-on, and power-off as the at least one text. For example, the augmented reality module 270 may acquire a voice command (for example, monitor power-on) corresponding to both the monitor and power-on through the recognition module 230. For example, the recognition module 230 may determine a voice command of monitor power on based on the information related to the external object, and may provide the determined voice command to the augmented reality module 270. The augmented reality module 270 may acquire a voice command of monitor power on through the input module 250. The augmented reality module 270 may perform a function of remotely controlling the monitor corresponding to the external object based on the voice command.

According to an embodiment of the present disclosure, the augmented reality module 270 may determine a short voice command corresponding to the application, function, etc. related to the electronic device 201 or the external object, and for example, having (for example, two, three, etc.) phonemes or (for example, one, two, etc.) syllables, the number of which is smaller than that of a text corresponding to the application, function, etc. For example, the augmented reality module 270 may determine a short text corresponding to a short voice command for the at least one text related to the external object. According to an embodiment of the present disclosure, the augmented reality module 270 may determine a short voice command that replaces at least a part of the text that will be displayed in relation to an application, function, etc. For example, the augmented reality module 270 may determine "computer" as a text to be displayed in relation to the application, function, etc. using an identifier for the external object. As an example, the augmented reality module 270 may determine "com" as a short voice command for the determined text (for example, "computer").

According to an embodiment of the present disclosure, the augmented reality module 270 may display a short voice command through the display module 210. For example, the augmented reality module 270 may display a "com" part (syllable of the word "computer") corresponding to the short text of the text that will be displayed in relation to the application, function, etc. differently from a "puter" part corresponding to the remaining part, using at least one of a color, a shape, a size, a symbol, etc. According to another embodiment of the present invention, the augmented reality module 270 may display only a short text (for example, "com") corresponding to the short voice command, or may display the text (for example, "computer") that will be displayed in relation to the application, function, etc.. According to an embodiment of the present invention, the augmented reality module 270 may output another information for example, a voice or an audio corresponding to the text or short text at the same time when the text or short text is displayed.

According to an embodiment of the present disclosure, when the external object is a monitor and power-on and power-off are recognized as functions related to the monitor, the augmented reality module 270 may display texts corresponding to the monitor, power-on, and power-off, and may determine the texts corresponding to on and off as short voice commands. In this case, the input module 250 may acquire at least one of a voice command of "monitor power-on" and a voice command of "monitor on" and may provide the at least one voice command to the augmented reality module 270. The augmented reality module 270 may control the monitor in response to a voice command. According to another embodiment of the present invention, the augmented reality module 270 may replace "power-on" with "on" and replace "power-off' with "off", through the display module 210.

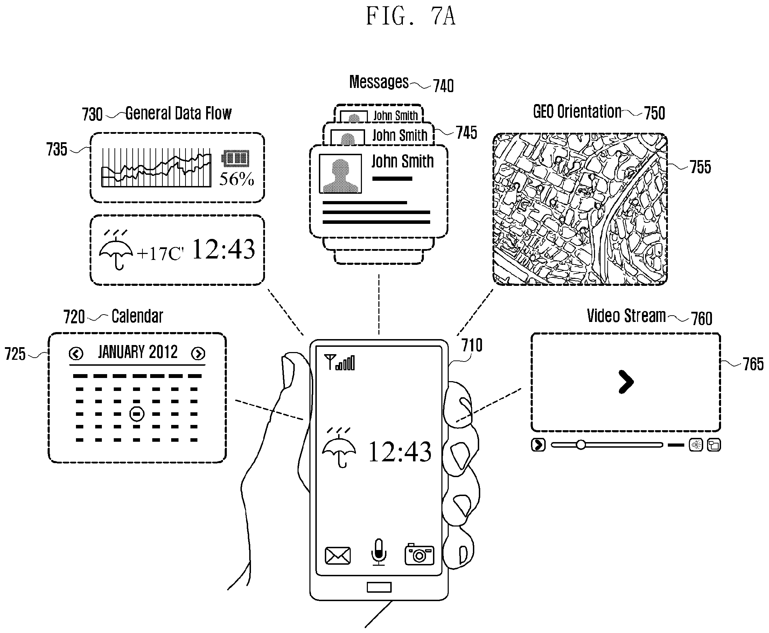

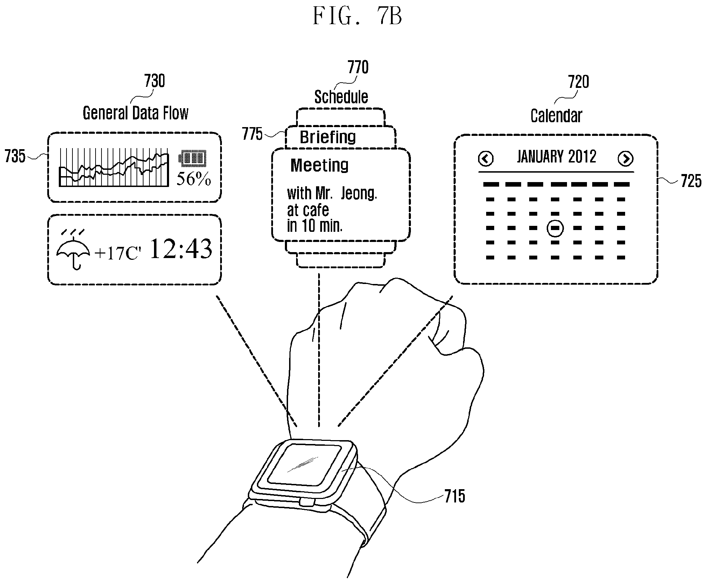

According to an embodiment of the present disclosure, when the external object corresponds to an external electronic device (for example, the electronic device 104, a wearable electronic device, a computer, etc.) that includes a processor to perform a function, the augmented reality module 270 may determine at least one text based on information related to the external electronic device. For example, the augmented reality module 270 may acquire the information related to the external electronic device from at least one of the external electronic device and the server connected to a communication interface (for example, the communication interface 160), through the recognition module 230. The augmented reality module 270 may display at least one text based on the information related to the external electronic device. Additional information related to an operation of displaying at least one text based on the information related to the external electronic device by the augmented reality module 270 is provided through FIGS. 7A and 7B.

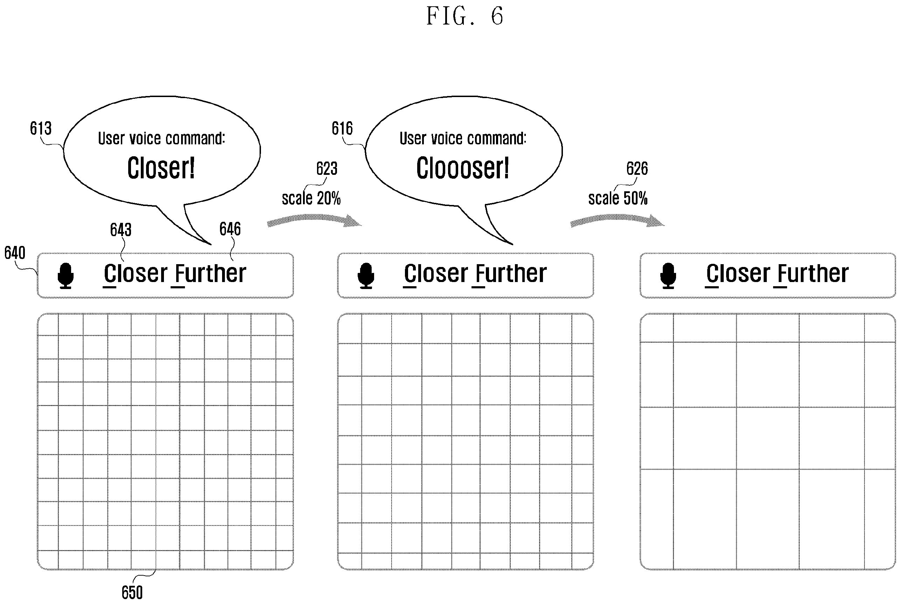

According to an embodiment of the present disclosure, the augmented reality module 270 may provide an application, function, etc. according to an attribute of a voice command. For example, the augmented reality module 270 provides the application, function, etc. (for example, an enlargement function) in a first mode (for example, enlargement by 120%) if the attribute (for example, a time period, the volume or tone of a voice, etc.) of at least a part (for example, "lou") of a voice command (for example, "loudly") is a first attribute (for example, less than a designated time period, a volume or tone of a voice, etc.), and may provide the application, function, etc. in a second mode (for example, enlargement by 160%) if the attribute of at least a part (for example, "lou") of a voice command (for example, "loudly") is a second attribute (for example, more than a designated time period, a volume or tone of a voice, etc.). Additional information related to an operation of providing an application, function, etc. according to an attribute of a voice command is provided to the the augmented reality module 270 with reference to FIG. 6.

In the invention, the augmented reality module 270 determines a text that will be displayed in relation to the external object. In the invention, when the external object includes a first external object (for example, a first monitor) and a second external object (for example, a second monitor) and a first text (for example, "monitor power-on") that will be displayed in relation to the first external object and a second text (for example, "monitor power-on") that will be displayed in relation to the second external object are the same, the augmented reality module 270 makes a decision such that a third text (for example, "large monitor power-on," "left monitor power-on," etc.) different from the first text is displayed as a text related to the first external object in addition to or in replacement of the first text. This allows for convenient differentiation between perfroming the same function on two or more different external devices.

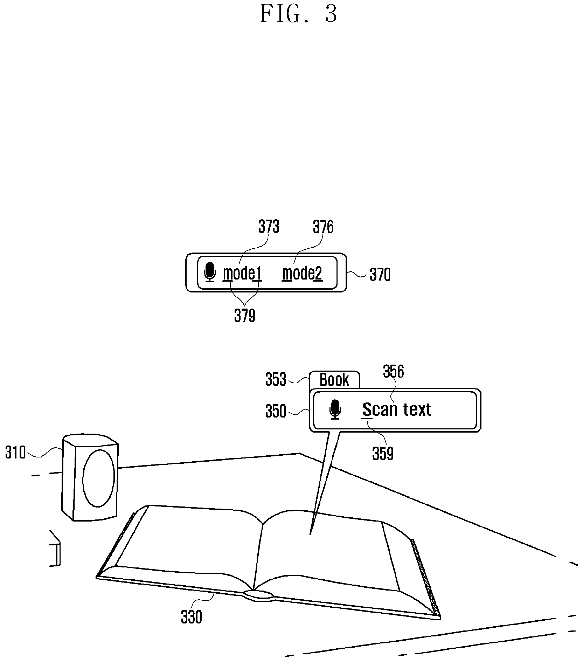

According to an embodiment of the present disclosure, the augmented reality module 270 may make a decision such that another text is displayed according to a state of the electronic device 201. For example, the at least one text for the external object (for example, a person) may include a first text and a second text, and when the state of the electronic device 201 is a first state (for example, an information search mode, a social network function mode, etc.), the augmented reality module 270 may display the first text (for example, information, the name, the age, the birthdate of the person, etc.), and when the state of the electronic device 201 is the second state (for example, while providing a photographing function), the augmented reality module 270 may display the second text (for example, photographing, enlargement, transmission, deletion, etc. of a photo). Additional information related to an operation of displaying another text according to the state of the electronic device 201 is provided to the augmented reality module 270 with reference to FIGS. 3, 8A and 8B, 9, and 10.

According to an embodiment of the present disclosure, the augmented reality module 270 may provide another application, function, etc. for the external object according to a state of the electronic device 201. For example, even in the case of the same external object, the augmented reality module 270 may provide another application, function, etc. according to a state of the electronic device 201. For example, when the remaining power level of the battery of the electronic device 201 corresponds to a designated range, the augmented reality module 270 may not provide a function of remotely controlling the external electronic device, for example, functions such as the remote control function may be temporarily disabled (selectively or otherwise) to temporarily reduce power consumption.

According to an embodiment of the present disclosure, the augmented reality module 270 may determine a state (for example, a sports mode, a home mode, etc.) of the electronic device 201 based on information of the external object. For example, the augmented reality module 270 may acquire location information related to the electronic device 201 through a communication module (for example, the communication interface 160) functionally connected to the electronic device 201. For example, the augmented reality module 270 may acquire location information related to the electronic device 201 based on coordinate information received through a GPS. The augmented reality module 270 may acquire location information (for example, a home, a vehicle, etc.) related to the electronic device 201 based on information on a base station or a wireless server device (for example, a WiFi device, a BT device, etc.) adjacent to the electronic device 201 received from the base station or the wireless server device. The augmented reality module 270 may acquire location information from a location information module (for example, a location based service module) for determining the location information. The augmented reality module 270 may determine a state (for example, a home mode, a city mode, an office mode, etc.) of the electronic device 201 based on the location information (for example, a home, a city, an office, etc.).

According to an embodiment of the present disclosure, the augmented reality module 270 may determine a state (for example, an activity mode, a sports mode, etc.) of the electronic device 201 based on a speed or motion of the electronic device 201, which has been acquired through a sensor module (for example, an acceleration sensor, a gyro sensor, etc.). According to an embodiment of the present disclosure, the augmented reality module 270 may determine a state (for example, a vehicle mode, a computer mode, etc.) of the electronic device 201 based on information related to the recognized external object (for example, a vehicle, a computer, etc.). According to an embodiment of the present disclosure, the augmented reality module 270 may determine a state of the electronic device 201 based on history or record (e.g., log) information made by the user using the electronic device 201. According to an embodiment of the present disclosure, the augmented reality module 270 may determine a state of the electronic device 201 based on various conditions or a combination thereof.

According to an embodiment of the present disclosure, the augmented reality module 270 may display information associated with the external object, based on distance information between the external object and the electronic device 201. For example, when information on a distance between the external object and the electronic device 201 corresponds to a first type of distance information (for example, when the distance between the external object and the electronic device 201 is less than about 3 m), the augmented reality module 270 may display a fist attribute (for example, a first shape, a first brightness, a first size, a first color, a first visual effect, etc.), and when the distance information corresponds to a second type of distance information (for example, the distance distance between the external object and the electronic device 201 is equal to or more than 3 m and less than 6 m), the augmented reality module 270 may display a second attribute (for example, a second shape, a second brightness, a second size, a second color, a second visual effect, etc.). According to an embodiment of the present disclosure, the augmented reality module 270 may acquire information on a distance (for example, an absolute distance, a relative distance, etc.) between the external object and the electronic device 201 through a communication module (for example, a GPS, a BT, a WiFi device, etc.), a sensor module (for example, an infrared ray sensor, a laser sensor, an ultrasonic sensor, etc.) or a camera module (for example, a stereo camera, a phase difference sensor camera, etc.).

FIG. 3 illustrates an example of displaying at least one text in relation to an external object by an electronic device, such as the electronic device of FIG. 1, according to various embodiments of the present invention.

Referring to FIG. 3, the electronic device (for example, via the functionality of the augmented reality module 270) may display at least one text 350 (for example, "Book" and "Scan text") including a text corresponding to an identifier 353 or a function, in relation to the external object 330 (for example, a book). For example, the electronic device may display a text 353 (for example, "Book") corresponding to an identifier for the external object 330 and a text 356 (for example, "Scan text") corresponding to a voice command related to the external object 330. In addition, the electronic device may determine and display a short text 359 (for example, "S") corresponding to a short voice command for the voice command. For example, the electronic device may display the short text 359 differently than the text 356 (for example, underlined, bolded, etc.). For example, the electronic device may provide a function corresponding to a voice command if acquiring a voice command corresponding to "Book Scan text", "Scan text" or "Book S."

According to an embodiment of the present disclosure, the electronic device may display a plurality of texts 370 corresponding to a plurality of states (for example, a first mode, a second mode, etc.) of the electronic device, respectively. The plurality of texts 370 may include a text 373 corresponding to the first state of the electronic device and a text 376 corresponding to the second state of the electronic device. For example, the electronic device may determine and display a text 379 (for example, "m" and "1") corresponding to a short voice command for the text 373 (for example, "mode 1") corresponding to the first state of the electronic device. For example, the electronic device may provide an application, function, etc. corresponding to the first state if acquiring a voice command corresponding to "ml" or "mode 1." According to an embodiment of the present disclosure, the electronic device may display various states related to the electronic device through the plurality of texts 370. For example, if the electronic device is in the first state, the electronic device may display the text 373 corresponding to the first state differently than the text 376 corresponding to the second state.

According to an embodiment of the present disclosure, the electronic device may provide at least one text related to the external object according to a state of the electronic device. For example, when the electronic device is in the first state, the electronic device may display the at least one text 350 for the external object 330. When the electronic device is in the second state, the electronic device may additionally or alternatively display at least one text (not shown) for the external object 310. According to an embodiment of the present disclosure, when the electronic device is in the second state, the electronic device may replace the at least one text 350 for the external object 330 with another function.

An electronic device (for example, the electronic device 101) according to various embodiments of the present disclosure includes an augmented reality module (for example, the augmented reality module 170) that may be implemented by a display (for example, the display 150) for displaying information and a processor (for example, the processor 120), and the augmented reality module may recognize an external object for the electronic device, and may display at least one text corresponding to a voice command corresponding to an application, function, etc. related to the external object through the display.

The augmented reality module according to various embodiments of the present disclosure may recognize the external object based on information acquired through a short-distance communication module, a sensor module, a camera module, etc. functionally connected to the electronic device.

The augmented reality module according to various embodiments of the present disclosure may acquire information associated with the external object from at least one of a memory functionally connected to the electronic device and an external device (for example, the server) for the electronic device, and may determine the at least one text based on the associated information. The information associated with the external object according to various embodiments of the present disclosure may include at least one of the at least one text, a location in which the at least one text will be displayed on the display, a size that will be displayed, a color that will be displayed, an image associated with the external object, etc., and the application, function, etc.

The augmented reality module according to various embodiments of the present disclosure may display an identifier corresponding to the external object as at least a part of the at least one text. The augmented reality module according to various embodiments of the present invention may display a short voice command corresponding to the application, function, etc., based on at least a part of the at least one text, and having a length shorter than that of the at least one text.

The augmented reality module according to various embodiments of the present disclosure may determine a short voice command for the at least one text corresponding to the application, function, etc. and having syllables, the number of which is smaller than that of the voice command.

The external object of the present invention includes a plurality of external objects including at least a first external object and a second external object. When a first text that will be displayed in relation to the first external object and a second text that will be displayed in relation to the second external object are the same, the augmented reality module according to various embodiments of the present disclosure displays a third text different from the first text as a text related to the first external object in addition to or in replacement of the first text. In addition, the augmented reality module displays a fourth text different from the second text as a text related to the second external object in addition to or in replacement of the second text.

The at least one text according to various embodiments of the present disclosure may include a first text and a second text. When the state of the electronic device is a first state, the augmented reality module according to various embodiments of the present disclosure may display a first text, and when the state of the electronic device is a second state, the augmented reality module may display a second text. According to various embodiments of the present disclosure, the external object may include at least one of a virtual object and a real object.

The augmented reality module according to various embodiments of the present disclosure may acquire the voice command, and may provide the application, function, etc. in response to the voice command. According to various embodiments of the present disclosure, the augmented reality module may provide the application, function, etc. to one of a plurality of modes including a first mode and a second mode. The augmented reality module may provide one of the first and second mode corresponding to an attribute of at least a part of the voice command based on the attribute. The augmented reality module may enlarge or reduce information that will be displayed on the display at a first magnification or a first speed according to provision of the first application, function, etc. in the first mode, and may enlarge or reduce the information at a second magnification or a second speed in the second mode.

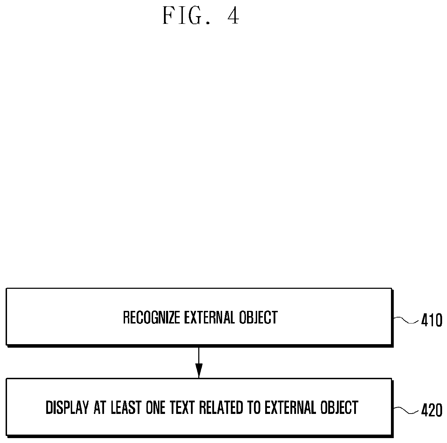

FIG. 4 illustrates a method of providing a voice command of an electronic device, such as the electronic device of FIG. 1, according to various embodiments of the present disclosure.

Referring to FIG. 4, in operation 410, the electronic device (for example, the augmented reality module 170) recognizes an external object for the electronic device. For example, the electronic device may recognize at least one of an identifier for the external object, a text corresponding to an application, function, etc., information on the external object, etc. In operation 420, the electronic device (for example, the augmented reality module 170) displays at least one text related to the external object. In the invention, the electronic device displays at least one text corresponding to a voice command corresponding to an application, function, etc. related to the external object, through a display functionally connected to the electronic device. In addition, the electronic device may additionally display an identifier corresponding to the external object.

Additionally, the electronic device (for example, the augmented reality module 170) acquires a voice command corresponding to the at least one text. For example, the electronic device may acquire at least one audio through an audio acquisition unit (for example, a microphone) and a communication module (for example, a communication interface), and may acquire a voice command corresponding to the at least one text based on the audio. The electronic device provides an application, function, etc. corresponding to the voice command, in response to the voice command.

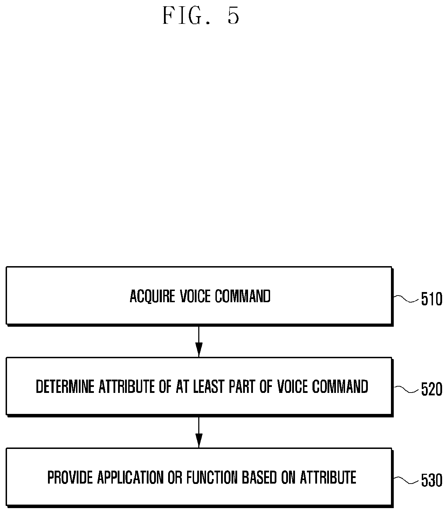

FIG. 5 illustrates a method of providing a voice command of an electronic device, such as the electronic device of FIG. 1, according to various embodiments of the present invention.

Referring to FIG. 5, in operation 510, the electronic device (for example, the augmented reality module 170) may acquire at least one voice command. For example, the electronic device may acquire a voice command (for example, record) corresponding to the application, function, etc. (for example, a function of capturing an image or video).

In operation 520, the electronic device may determine an attribute of at least a part of the voice command. For example, the electronic device may determine an attribute of "re" as at least a part of a voice command of "record." For example, the electronic device may determine the length of "re." According to an embodiment of the present disclosure, the electronic device may measure a time period for which the size (e.g. volume/amplitide) of a voice is maintained in a range or more as a time period for which "re" is maintained. When the user pronounces "record" shortly, the electronic device may determine an attribute (for example, a length) of "re" based on a time period for which "re" is maintained. Furthermore, when the user pronounces "re---cord" (e.g. by placing different emphasis on different syllables or other word portions), the electronic device the electronic device may determine an attribute (for example, a length) of "re" of "re---cord", based on the fact that a time period for which "re" of "re-cord" is maintained is longer than a time period for which "cord" of "re---cord." Furthermore, the electronic device may determine the time period of "cord." For example, the electronic device may distinguish a case in which the user pronounces "record" shortly from a case in which the user pronounces "record" long as if "re---cord." Although time period has been exemplified as an attribute of the voice command, the attribute of the voice command may be attributes of various voice commands such as the volume, tone, and accent of the voice command or a combination thereof.

In operation 530, the electronic device may provide an application, function, etc. for a voice command based on an attribute of the voice command. According to an embodiment of the present invention, the electronic device may provide the application, function, etc. to one of a plurality of modes including a first mode and a second mode. For example, a function of capturing an image or video may include a plurality of modes (or functions) such as capturing one image, continuous capturing, capturing of a video, etc. According to an embodiment of the present disclosure, the electronic device may provide one of a first mode and a second mode based on the length of at least a part of a voice command (for example, "record"). For example, the electronic device may provide a single image capturing function based on the voice command such as "record" having a length shorter than a designated time period, or may provide a continuous capturing function based on a voice command such as "re---cord" having a length longer than a designated time period.

FIG. 6 illustrates an example of providing a function based on an attribute of a voice command by an electronic device, such as the electronic device of FIG. 1, according to various embodiments of the present disclosure.

Referring to FIG. 6, the electronic device (for example, the augmented reality module 170) may display at least one text 640 related to the external object (for example, expandable information, a map, a photo, etc.). For example, the at least one text 640 may include a text portion 643 (for example, "Closer") corresponding to an enlargement function provided in relation to the external object 650 and a text 646 (for example, "Further") corresponding to a reduction function. According to an embodiment of the present disclosure, if acquiring a voice command 613 (for example, "closer") corresponding to the text 643 corresponding to an enlargement function and having a first attribute (for example, a relatively short length), the electronic device may provide an enlargement function based on a first mode 623 (for example, a first magnification, a first speed, etc.). If acquiring a voice command 616 (for example, "cloooser") corresponding to the text 643 corresponding to an enlargement function and having a second attribute (for example, a relatively long length), the electronic device may provide an enlargement function based on a second mode 626 (for example, a second magnification, a second speed, etc.).

FIGS. 7A and 7B illustrate examples of displaying information related to an external object by the electronic device, such as the electronic device of FIG. 1, according to various embodiments of the present disclosure.

Referring to FIG. 7A, when the external object corresponds to the external electronic device 710 (for example, a smartphone) including a processor for providing a function, the electronic device (for example, the augmented reality module 170) may display at least one text based on information related to the external electronic device. For example, the electronic device may acquire information related to the external electronic device 710 from a memory functionally connected to the electronic device, or may acquire the information from the external electronic device 710 through a communication interface (for example, the communication interface 160). The electronic device may display a text 720, 730, 740, 750 or 760 corresponding to an application, function, etc. related to the external electronic device 710, based on information related to the external electronic device 710. The application, function, etc. related to the external electronic device 710 may include at least one of a schedule, a calendar, state information, weather, time, a message, a map, a multimedia function, etc. According to an embodiment of the present disclosure, the electronic device may display an image 725, 735, 745, 755, or 765 related to an application, function, etc related to the external electronic device 710, together with the at least one text. The image may be displayed, for example, on a screen corresponding to the electronic device (either integrated with the device or physically separate from it) or may be projected as a hologram into the air.

Referring to FIG. 7B, the electronic device may display at least one text corresponding to an application, function, etc. provided by the electronic device additionally or alternatively. According to an embodiment of the present disclosure, when the external object 715 is a watch, the electronic device may determine an application, function, etc. provided by the electronic device in correspondence to the watch. For example, the electronic device may make a decision such that an application, function, etc. that has many usage histories in relation to a watch, based on the usage histories for the application, function, etc. of the user. The electronic device may display at least one text 720, 730 or 770 for the determined application, function, etc. For example, the electronic device may display a text corresponding to at least one of state information of the electronic device, a calendar, weather, a watch, a schedule, a task, etc. as a function corresponding to the watch. According to an embodiment of the present disclosure, the external object 715 may include an external electronic device (for example, a smart watch) that includes a processor and a communication module and is connected to the electronic device to provide a function. According to an embodiment of the present invention, the electronic device may display at least one of images 725, 735, and 775 related to a function, together with at least one text.

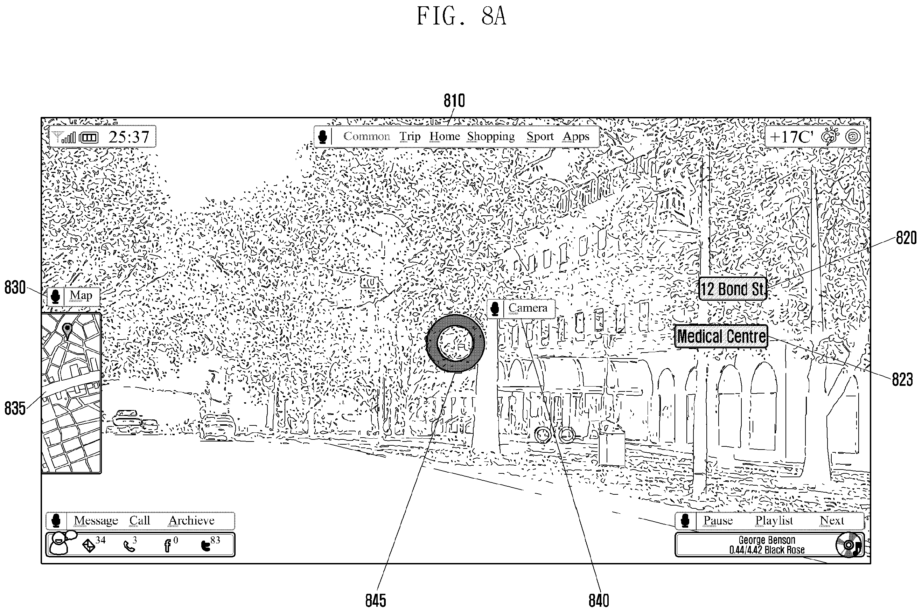

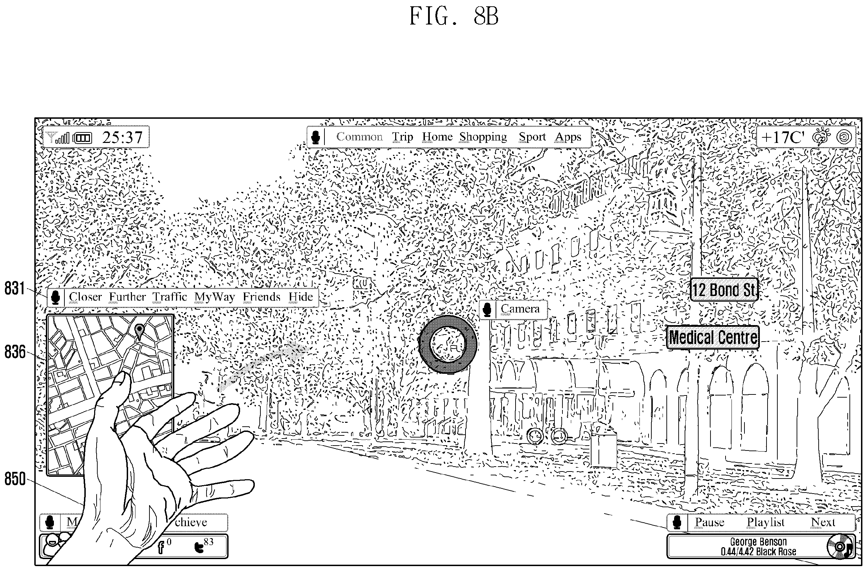

FIGS. 8A and 8B illustrate examples of displaying information related to an external object by the electronic device, such as the electronic device of FIG. 1, according to various embodiments of the present disclosure.

Referring to FIG. 8A, the electronic device (for example, the augmented reality module 170) may display at least one text 810, 820, 823, 830, or 840 related to an external object (for example, a building, a road, etc.). According to an embodiment of the present invention, the electronic device may display at least one text 810 corresponding to a state (for example, a general state, a travel state, a home state, a shopping activity, an application, etc.) of the electronic device. If acquiring a voice input corresponding to at least one text 810 corresponding to a state of the electronic device, the electronic device may change the state of the electronic device. Alternatively, the electronic device may automatically determine a state of the electronic device based on information related to the external object. According to an embodiment of the present invention, the electronic device may acquire information associated with the external object based on information (for example, location information) related to the external object (for example, a building, a road, etc.), and may display the text 830 and an image 835. In addition, the electronic device may display a virtual external object 845 based on a state of the electronic device, and may display the text 840 corresponding to a function (for example, a camera) related to the virtual external object 845.

Referring to FIG. 8B, the electronic device may provide an application, function, etc. related to the external object based on a motion input in addition to or in replacement of the example of FIG. 8A. For example, the electronic device may acquire a motion input 850 related to the text 830 or the image 835. The electronic device may provide a function (for example, a map, a location based service, etc.) related to the text 830 or the image 835, based on the motion input 850. For example, the electronic device may provide an image 836 after making the location, size, transparency, etc. of the displayed image 835 different. The electronic device may display a text 831 in addition to or in replacement of the text 830. For example, the text 831 may include a text (for example, enlargement, reduction, traffic information, road information, surrounding information, social information, etc.) related to a function related to the text 830 or the image 836. According to an embodiment of the present disclosure, the electronic device may display at least one of the text 831 and the image 836 if acquiring a voice input (for example, "Map" or "M") corresponding to the text 830.

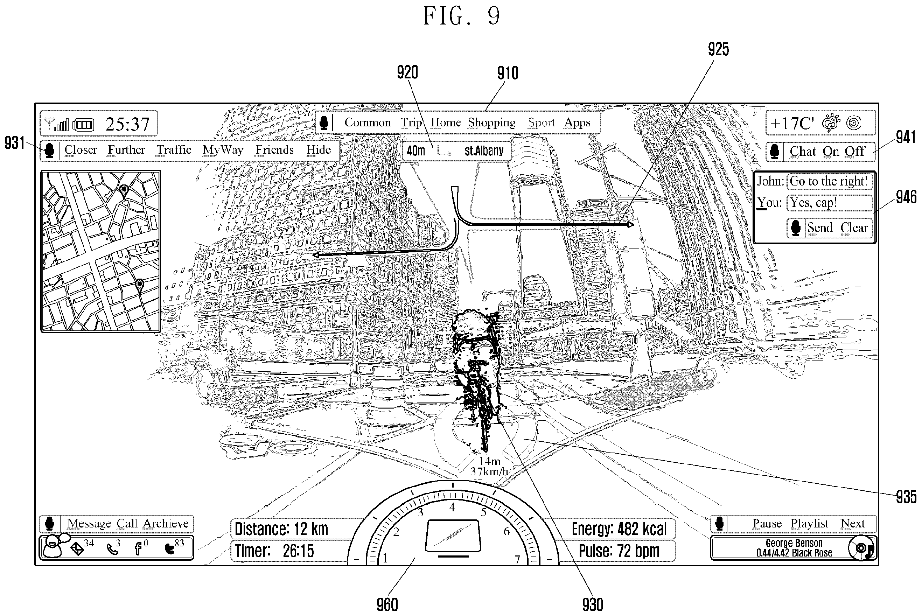

FIG. 9 illustrates an example of displaying related to an external object by an electronic device, such as the electronic device of FIG. 1, according to various embodiments of the present disclosure.

Referring to FIG. 9, the electronic device (for example, the augmented reality module 170) may display at least one text 910, 920, 931, 941, or 960 related to an external object (for example, a building, a person, etc.). According to an embodiment of the present disclosure, the electronic device may display information (for example, the text 920, an image 925, etc.) related to the external object (for example, a road, a building, etc.). For example, the information related to the external object (for example, a road) may include the text 920 or the image 925 related to road information.

According to an embodiment of the present disclosure, the electronic device may display information (for example, a text 935, 941 or 946) related to the external object 930 (for example, a person). For example, the electronic device may display at least one (for example, the text 935) of information corresponding to a distance between the electronic device and the external object and information on a speed of the external object, as the information related to the external object 930. For example, the electronic device may receive information corresponding to a distance of the external object 930 (for example, a person, a riding means such as a bicycle, etc.) or speed information from an electronic device corresponding to the external object 930 (for example, an electronic device carried by a person, or an electronic device mounted to a riding means such as a vehicle or a bicycle) corresponding to the external object 930 through a communication interface (for example, a BT, WiFi, etc.). The electronic device may acquire information corresponding to a distance of the external object 930 (for example, a person, a riding means such as a bicycle, etc.) or speed information, through a sensor module (for example, an infrared ray sensor, an acceleration sensor, etc.) or a camera module functionally connected to the electronic device. For example, the electronic device may acquire information on a distance between the external object 930 and the electronic device through a sensor module (for example, an infrared ray sensor), a camera module, etc. The electronic device may acquire information on a speed for the external object 930, based on distance information changed for a designated time period. Additionally or alternatively, the electronic device may acquire a first speed corresponding to the electronic device through a sensor module (for example, an acceleration sensor) or a communication interface (for example, a GPS), and may determine a second speed for the external object 930 based on the first speed.

According to an embodiment of the present disclosure, the electronic device may display the text 941 or 946 related to an application, function, etc. (for example, a messenger, a voice communication, etc.) related to a communication with the external object. According to an embodiment of the present disclosure, the electronic device may display the text 946 as an application, function, etc. corresponding to a voice command (for example, "Chat On," "C On," etc.) if acquiring the voice command corresponding to the text 941. For example, the electronic device may display at least one of a text (for example, a message) acquired in relation to the external object 930 and a text (for example, "speech to text") related to an audio as the text 946. If acquiring a voice command (for example, "Send Yes Cap," "Yes Cap Send," etc.) corresponding to the text 946, the electronic device may transmit a message (for example, "Yes Cap") to the external object 930 as an application, function, etc. corresponding to the voice command.

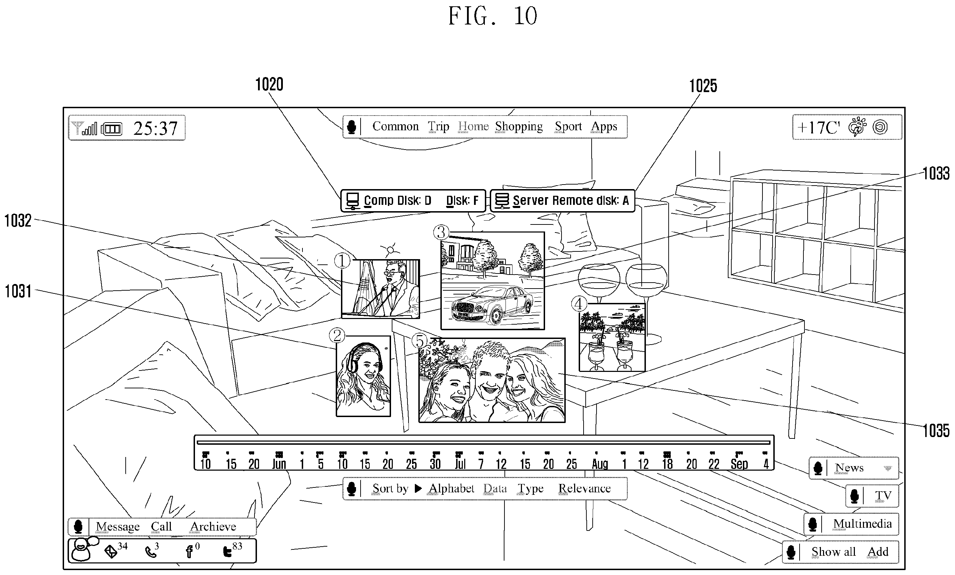

FIG. 10 illustrates an example of displaying information related to an external object by an electronic device, such as the electronic device of FIG. 1, according to various embodiments of the present disclosure.

Referring to FIG. 10, the electronic device (for example, the augmented reality module 170) may display at least one text related to the external object. For example, the electronic device may display texts 1020 and 1025 related to the real external object (for example, a computer, a TV, etc.). Alternatively, the electronic device may display texts 1031, 1032, 1033 and 1035 related to a virtual external object (for example, an image file, a video file, etc.). According to an embodiment of the present invention, the electronic device may display texts 1031 to 1035 including identifiers (for example, numbers, names, etc.) for selecting the virtual external object. If acquiring a voice input (for example, "3" or "Three") corresponding to the text 1033, the electronic device may provide an application, function, etc. (for example, selection, edition, sharing or reproduction) related a virtual external object corresponding to the voice command.

According to various embodiments of the present disclosure, a method may include recognizing an external object for an electronic device (for example, the electronic device 101), and displaying at least one text corresponding to a voice command corresponding to an application, function, etc. related to the external object, through a display (for example, the display 150) functionally connected to the electronic device.

According to various embodiments of the present disclosure, the recognizing of the external object may include recognizing the external object, based on information acquired through a short-range communication module, a sensor module, or a camera module functionally connected to the electronic device. According to various embodiments of the present invention, the recognizing of the external object may further include acquiring information associated with the external object from at least one of a memory functionally connected to the electronic device and an external device (for example, a server) for the electronic device, and determining the at least one text, based on the associated information.

According to various embodiments of the present disclosure, the information associated with the external object may include at least one of the at least one text, a location in which the at least one text will be displayed on the display, a size that will be displayed, a color that will be displayed, an image associated with the external object, the application, function, etc.

According to various embodiments of the present disclosure, the displaying of the at least one text may include displaying an identifier corresponding to the external object as at least a part of the at least one text.

According to various embodiments of the present disclosure, the displaying of the at least one text may include displaying a short voice command corresponding to the application, function, etc., based on at least a part of the at least one text, and having a length shorter than that of the at least one text.

According to various embodiments of the present disclosure, the recognizing of the external object may further include determining a short voice command for the at least one text corresponding to the application, function, etc. and having syllables, the number of which is smaller than that of the voice command.

In the invention, the external object includes a plurality of external objects including at least a first external object and a second external object.

In the invention, when a first text that will be displayed in relation to the first external object and a second text that will be displayed in relation to the second external object are the same, the displaying of the at least one text includes at least one of displaying a third text different from the first text as a text related to the first external object in addition to or in replacement of the first text, and displaying a fourth text different from the second text as a text related to the second external object in addition to or in replacement of the second text.

According to various embodiments of the present disclosure, the at least one text may include a first text and a second text, and the displaying of the at least one text may include displaying a first text when a state of the electronic device is a first state and displaying a second text when the state of the electronic device is a second state. According to various embodiments of the present disclosure, the external object may include at least one of a virtual object and a real object.

According to various embodiments of the present disclosure, the method may further include acquiring the voice command and/or motion comand (as described with reference to Figure 8B), and providing the application, function, etc. in response to the voice and/or motion command.

According to various embodiments of the present disclosure, the providing of the application, function, etc. may include providing the application, function, etc. as one of a plurality of modes including at least a first mode and a second mode.

According to various embodiments of the present disclosure, the providing of the one mode may include providing the one mode as one of the first mode and the second mode corresponding to an attribute of at least a part of the voice command, based on the attribute.

According to various embodiments of the present disclosure, the providing of the one mode may include enlarging or reducing information that will be displayed on the display at a first magnification ratio or a first speed according to provision of the first application, function, etc. in the first mode, and may enlarge or reduce the information at a second magnification ratio or a second speed in the second mode.

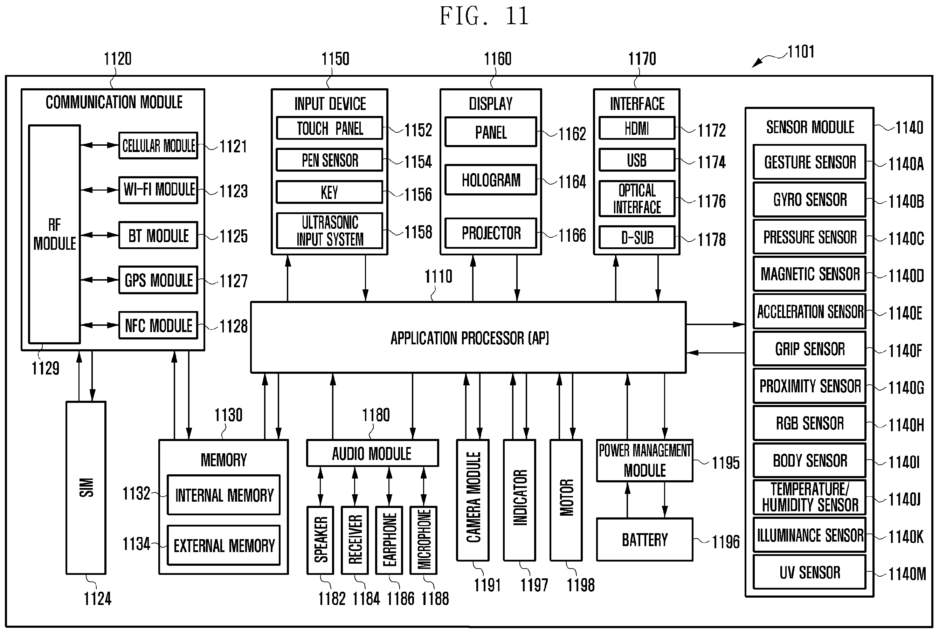

FIG. 11 is a block diagram of an electronic device according to various embodiments of the present disclosure. The electronic device of FIG. 11 may configure, for example, a whole or a part of the electronic device 101 illustrated in FIG. 1.

Referring to FIG. 11, the electronic device 1101 includes one or more Application Processors (APs) 1110, a communication module 1120, a Subscriber Identification Module (SIM) card 1124, a memory 1130, a sensor module 1140, an input device 1150, a display 1160, an interface 1170, an audio module 1180, a camera module 1191, a power management module 1195, a battery 1196, an indicator 1197, and a motor 1198.

The AP 1110 operates an operating system (OS) or an application program so as to control a plurality of hardware or software component elements connected to the AP 1110 and execute various data processing and calculations including multimedia data. The AP 1110 may be implemented by, for example, a System on Chip (SoC). According to an embodiment of the present disclosure, the processor 1110 may further include a Graphic Processing Unit (GPU). The processor 1110 may further include the augmented reality module 170.

The communication module 1120 (for example, communication interface 160) transmits/receives data in communication between different electronic devices (for example, the electronic device 104 and the server 106) connected to the electronic device 1101 (for example, electronic device 101) through a network. According to an embodiment, the communication module 1120 includes a cellular module 1121, a WiFi module 1123, a BT module 1125, a GPS module 1127, a NFC module 1128, and a Radio Frequency (RF) module 1129.

The cellular module 1121 provides a voice, a call, a video call, an SMS, or an Internet service through a communication network (for example, LTE, LTE-A, CDMA, WCDMA, UMTS, WiBro, GSM or the like). Further, the cellular module 1121 may distinguish and authenticate electronic devices or different users of the same eectronic device within a communication network by using a SIM (for example, the SIM card 1124). According to an embodiment of the present disclosure, the cellular module 1121 performs at least some of the functions which can be provided by the AP 1110. For example, the cellular module 1121 may perform at least some of the multimedia control functions.

According to an embodiment of the present disclosure, the cellular module 1121 may include a Communication Processor (CP). Further, the cellular module 1121 may be implemented by, for example, an SoC. Although the components such as the cellular module 1121 (for example, CP), the memory 1130, and the power management module 1195 are illustrated as components separate from the AP 1110 in FIGS. 8A and 8B, the AP 1110 may include at least some (for example, cellular module 1121) of the aforementioned components in an embodiment of the present disclosure.

According to an embodiment of the present disclosure, the AP 1110 or the cellular module 1121 (for example, communication processor) may load a command or data received from at least one of a non-volatile memory and other components connected to each of the AP 1110 and the cellular module 1121 to a volatile memory and process the loaded command or data. Further, the AP 1110 or the cellular module 1121 may store data received from at least one of other components or generated by at least one of other components in a non-volatile memory.

Each of the WiFi module 1123, the BT module 1125, the GPS module 1127, and the NFC module 1128 may include, for example, a processor for processing data transmitted/received through the corresponding module. Although the cellular module 1121, the WiFi module 1123, the BT module 1125, the GPS module 1127, and the NFC module 1128 are illustrated as blocks separate from each other in FIGS. 8A and 8B, at least some (for example, two or more) of the cellular module 1121, the WiFi module 1123, the BT module 1125, the GPS module 1127, and the NFC module 1128 may be included in one IC or one IC package according to one embodiment. For example, at least some (for example, the communication processor corresponding to the cellular module 1121 and the WiFi processor corresponding to the WiFi module 1123) of the processors corresponding to the cellular module 1121, the WiFi module 1123, the BT module 1125, the GPS module 1127, and the NFC module 1128 may be implemented by one SoC.

The RF module 1129 transmits/receives data, for example, an RF signal. Although not illustrated, the RF module 1129 may include, for example, a transceiver, a Power Amplifier Module (PAM), a frequency filter, a Low Noise Amplifier (LNA) or the like. Further, the RF module 1129 may further include a component for transmitting/receiving electronic waves over a free air space in wireless communication, for example, a conductor, a conducting wire, or the like. Although the cellular module 1121, the WiFi module 1123, the BT module 1125, the GPS module 1127, and the NFC module 1128 share one RF module 1129 in FIG. 11, at least one of the cellular module 1121, the WiFi module 1123, the BT module 1125, the GPS module 1127, and the NFC module 1128 may transmit/receive an RF signal through a separate RF module according to an embodiment of the present disclosure.

The SIM card 1124 is a card including a SIM and may be inserted into a slot formed in a particular portion of the electronic device. The SIM card 1124 includes unique identification information (for example, Integrated Circuit Card IDentifier (ICCID)) or subscriber information (for example, International Mobile Subscriber Identity (IMSI).

The memory 1130 (for example, memory 130) may include an internal memory 1132 or an external memory 1134. The internal memory 1132 may include, for example, at least one of a volatile memory (for example, a Random Access Memory (RAM), a dynamic RAM (DRAM), a static RAM (SRAM), a synchronous dynamic RAM (SDRAM), and the like), and a non-volatile Memory (for example, a Read Only Memory (ROM), a one time programmable ROM (OTPROM), a programmable ROM (PROM), an erasable and programmable ROM (EPROM), an electrically erasable and programmable ROM (EEPROM), a mask ROM, a flash ROM, a not and (NAND) flash memory, a not or (NOR) flash memory, and the like).

According to an embodiment of the present disclosure, the internal memory 1132 may be a Solid State Drive (SSD). The external memory 1134 may further include a flash drive, for example, a Compact Flash (CF), a Secure Digital (SD), a Micro-SD, a Mini-SD, an extreme Digital (xD), or a memory stick. The external memory 1134 may be functionally connected to the electronic device 1101 through various interfaces. According to an embodiment of the present disclosure, the electronic device 1101 may further include a storage device (or storage medium) such as a hard drive.

The sensor module 1140 measures a physical quantity or detects an operation state of the electronic device 1101, and converts the measured or detected information to an electronic signal. The sensor module 1140 may include, for example, at least one of a gesture sensor 1140A, a gyro sensor 1140B, an atmospheric pressure (barometric) sensor 1140C, a magnetic sensor 1140D, an acceleration sensor 1140E, a grip sensor 1140F, a proximity sensor 1140G, a color sensor 1140H (for example, Red, Green, and Blue (RGB) sensor) 1140H, a biometric (i.e., body) sensor 11401, a temperature/humidity sensor 1140J, an illumination (light) sensor 1140K, and a Ultra Violet (UV) sensor 1140M. Additionally or alternatively, the sensor module 1140 may include, for example, an E-nose (electronic nose) sensor, an electromyography (EMG) sensor, an electroencephalogram (EEG) sensor, an electrocardiogram (ECG) sensor, an InfraRed (IR) sensor, an iris sensor, a fingerprint sensor (not illustrated), and the like. The sensor module 1140 may further include a control circuit for controlling one or more sensors included in the sensor module 1140.

The input device 1150 includes a touch panel 1152, a (digital) pen sensor 1154, a key 1156, and an ultrasonic input device 1158. For example, the touch panel 1152 may recognize a touch input in at least one type of a capacitive type, a resistive type, an infrared type, and an acoustic wave type. The touch panel 1152 may further include a control circuit. In the capacitive type, the touch panel 1152 can recognize proximity as well as a direct touch. The touch panel 1152 may further include a tactile layer. In this event, the touch panel 1152 provides a tactile reaction to the user.

The (digital) pen sensor 1154 may be implemented, for example, using a method identical or similar to a method of receiving a touch input of the user, or using a separate recognition sheet. The key 1156 may include, for example, a physical button, an optical key, or a key pad. The ultrasonic input device 1158 is a device which can detect an acoustic wave by a microphone (for example, a microphone 1188) of the electronic device 1101 through an input means generating an ultrasonic signal to identify data and can perform wireless recognition. According to an embodiment of the present disclosure, the electronic device 1101 receives a user input from an external device (for example, computer, server, etc.) connected to the electronic device 1101 by using the communication module 1120.

The display 1160 (for example, display 150 of the electronic device 101) includes a panel 1162, a hologram device 1164, and a projector 1166. The panel 1162 may be, for example, a Liquid Crystal Display (LCD) or an Active Matrix Organic Light Emitting Diode (AM-OLED). The panel 1162 may be implemented to be, for example, flexible, transparent, or wearable. The panel 1162 may be configured by the touch panel 1152 and one module. The hologram device 1164 shows a stereoscopic image in the air by using interference of light. The projector 1166 projects light on a screen to display an image. For example, the screen may be located inside or outside the electronic device 1101. According to an embodiment, the display 1160 may further include a control circuit for controlling the panel 1162, the hologram device 1164, and the projector 1166. The hologram device 1164 may correspond to a display functionally connected to the device and thus the display may be in the air only and not display on a conventional electronic screen.

The interface 1170 includes, for example, an HDMI 1172, a USB 1174, an optical interface 1176, and a D-subminiature (D-sub) 1178. The interface 1170 may be included in, for example, the communication interface 160 illustrated in FIG. 1. Additionally or alternatively, the interface 1190 may include, for example, a Mobile High-definition Link (MHL) interface, an SD card/Multi-Media Card (MMC), or an Infrared Data Association (IrDA) standard interface.

The audio module 1180 bi-directionally converts a sound and an electronic signal. At least some components of the audio module 1180 may be included in, for example, the input/output interface 140 illustrated in FIG. 1. The audio module 1180 processes sound information input or output through, for example, a speaker 1182, a receiver 1184, an earphone 1186, the microphone 1188 or the like.

The camera module 1191 is a device which can photograph a still image and a video. According to an embodiment of the present disclosure, the camera module 1191 may include one or more image sensors (for example, a front sensor or a back sensor), an Image Signal Processor (ISP) (not shown) or a flash (for example, an LED or xenon lamp).

The power management module 1195 manages power of the electronic device 1101. Although not illustrated, the power management module 1195 may include, for example, a Power Management Integrated Circuit (PMIC), a charger IC, a battery or fuel capacity gauge, etc.

The PMIC may be mounted to, for example, an IC or an SoC semiconductor. A charging method may be divided into wired and wireless methods. The charger IC charges a battery and prevents over (excess) voltage or over (excess) current from flowing from a charger. According to an embodiment, the charger IC includes a charger IC for at least one of the wired charging method and the wireless charging method. The wireless charging method may include, for example, a magnetic resonance method, a magnetic induction method and an electromagnetic wave method, and additional circuits for wireless charging, for example, circuits such as a coil loop, a resonant circuit, a rectifier or the like may be added.

The battery fuel gauge measures, for example, a remaining quantity of the battery 1196, or a voltage, a current, or a temperature of the battery, for example during charging. The battery 1196 may store or generate electricity and supply power to the electronic device 1101 by using the stored or generated electricity. The battery 1196 may include a rechargeable battery, a solar battery, etc.

The indicator 1197 shows particular statuses of the electronic device 1101 or a part (for example, AP 1110) of the electronic device 1101, for example, a booting status, a message status, a charging status, and the like. The motor 1198 converts an electrical signal to a mechanical vibration. Although not illustrated, the electronic device 1101 may include a processing unit (for example, a GPU) for supporting a mobile TV module. The processing unit for supporting the mobile TV may process, for example, media data according to a standard of Digital Multimedia Broadcasting (DMB), Digital Video Broadcasting (DVB), media flow or the like.

The above described components of the electronic device according to various embodiments of the present disclosure may be formed of one or more components, and a name of a corresponding component element may be changed based on the type of electronic device. The electronic device according to the present disclosure may include one or more of the aforementioned components or may further include other additional components, or some of the aforementioned components may be omitted. Further, some of the components of the electronic device according to the various embodiments of the present disclosure may be combined to form a single entity, and thus, may equivalently execute functions of the corresponding elements prior to the combination.

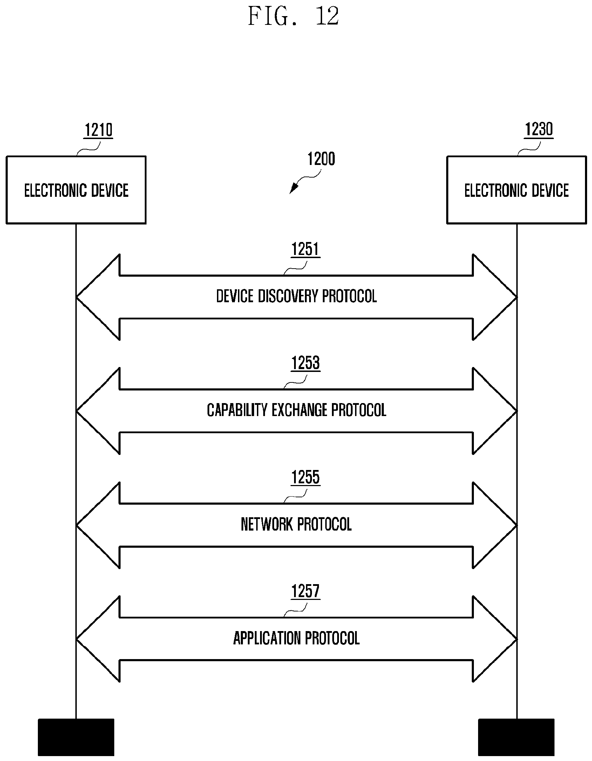

FIG. 12 illustrates communication protocols between a plurality of electronic devices according to various embodiments of the present disclosure.

Referring to FIG. 12, the communication protocols 1200 may include a device discovery protocol 1251, a capability exchange protocol 1253, a network protocol 1255, and an application protocol 1257.

According to an embodiment of the present disclosure, the device discovery protocol 1251 may be a protocol by which the electronic devices (e.g., an electronic device 1210 and an electronic device 1230) detect external devices capable of communicating with the electronic devices, or connect with the detected external electronic devices. For example, the electronic device 1210 (e.g., the electronic device 101) may detect the electronic device 1230 (e.g., the electronic device 104) as an electronic device capable of communicating with the electronic device 1210 through communication methods (e.g., WiFi, BT, USB, or the like) which are available in the electronic device 1210, by using the device discovery protocol 1251. In order to connect with the electronic device 1230 for communication, the electronic device 1210 may obtain and store identification information on the detected electronic device 1230, by using the device discovery protocol 1251. The electronic device 1210 may initiate the communication connection with the electronic device 1230, for example, based on at least the identification information.

According to an embodiment of the present disclosure, the device discovery protocol 1251 may be a protocol for authentication between a plurality of electronic devices. For example, the electronic device 1210 may perform authentication between itself and the electronic device 1230, based on at least communication information (e.g., Media Access Control (MAC), Universally Unique Identifier (UUID), Subsystem Identification (SSID), Internet Protocol (IP) address) for connection with the electronic device 1230.

According to an embodiment of the present disclosure, the capability exchange protocol 1253 may be a protocol for exchanging information related to service functions which can be supported by at least one of the electronic device 1210 or the electronic device 1230. For example, the electronic device 1210 and the electronic device 1230 may exchange information on service functions which are currently supported by each electronic device with each other through the capability exchange protocol 1253. The exchangeable information may include identification information indicating a specific service among a plurality of services supported by the electronic device 1210 and the electronic device 1230. For example, the electronic device 1210 may receive identification information for a specific service provided by the electronic device 1230 from the electronic device 1230 through the capability exchange protocol 1253. In this case, the first electronic device 1210 may determine whether it can support the specific service, based on the received identification information.

According to an embodiment of the present disclosure, the network protocol 1255 may be a protocol for controlling the data flow which is transmitted and received between the electronic devices (e.g., the electronic device 1210 and the electronic device 1230) connected with each other for communication, for example, in order to provide interworking services. For example, at least one of the electronic device 1210 or the electronic device 1230 may perform the error control or the data quality control, by using the network protocol 1255. Alternatively or additionally, the network protocol 1255 may determine the transmission format of data transmitted and received between the electronic device 1210 and the electronic device 1230. In addition, at least one of the electronic device 1210 or the electronic device 1230 may manage a session (e.g., session connection or session termination) for the data exchange between them, by using the network protocol 1255.

According to an embodiment of the present disclosure, the application protocol 1257 may be a protocol for providing a procedure or information to exchange data related to services which are provided to the external devices. For example, the electronic device 1210 (e.g., the electronic device 101) may provide services to the electronic device 1230 (e.g., the electronic device 104 or the server 106) through the application protocol 1257.

According to an embodiment of the present disclosure, the communication protocols 1200 may include standard communication protocols, communication protocols designated by individuals or groups (e.g., communication protocols designated by communication device manufacturers or network providers), or a combination thereof.

The term "module" used in various embodiments of the present disclosure may refer to, for example, a "unit" including one of hardware, software, and firmware, or a combination of two or more of the hardware, software, and firmware. The "module" may be interchangeably used with a term, such as unit, logic, logical block, component, or circuit. The "module" may be the smallest unit of an integrated component or a part thereof. The "module" may be the smallest unit that performs one or more functions or a part thereof. The "module" may be mechanically or electronically implemented. For example, the "module" according to various embodiments of the present disclosure may include at least one of an Application-Specific Integrated Circuit (ASIC) chip, a Field-Programmable Gate Arrays (FPGAs), and a programmable-logic device for performing operations which have been known or are to be developed hereafter.

According to various embodiments of the present disclosure, at least a part of a device (for example, modules or functions thereof) or a method (for example, operations) according to various embodiments of the present disclosure may be embodied by, for example, a command stored in a computer readable storage medium in a form of a programming module. When the command is executed by one or more processors (for example, the processor 120), the one or more processors may execute a function corresponding to the command. The computer-readable storage medium may be, for example, the memory 130. At least a part of the programming module may be implemented (for example, executed) by, for example, the processor 120. At least a part of the programming module may include, for example, a module, a program, a routine, a set of instructions and/or a process for performing one or more functions.

The computer readable recording medium may include magnetic media such as a hard disc, a floppy disc, and a magnetic tape, optical media such as a compact disc read only memory (CD-ROM) and a DVD, magneto-optical media such as a floptical disk, and hardware devices specifically configured to store and execute program commands, such as a ROM, a RAM, and a flash memory. In addition, the program instructions may include high class language codes, which can be executed in a computer by using an interpreter, as well as machine codes made by a compiler. The aforementioned hardware device may be configured to operate as one or more software modules in order to perform the operation of various embodiments of the present disclosure, and vice versa. The program instructions may be executed by a virtual machine.

A module or a programming module according to the present disclosure may include at least one of the described component elements, a few of the component elements may be omitted, or additional component elements may be included. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added.

According to various embodiments of the present disclosure, a storage medium for storing commands, which is set to allow at least one processor to perform at least one operation when the commands are executed by the at least one processor, wherein the at least one operation includes an operation of recognizing an external object for an electronic device, an operation of displaying at least one text related to the external object through a display functionally connected to the electronic device, an operation of acquiring a voice command corresponding to the at least one text, and an operation of providing an application, function, etc. corresponding to the voice command in response to the voice command.

While the present disclosure has been shown and described with reference to various embodiments thereof, it will be understood by those skilled in the art that various changes in form and details may be made therein without departing from the scope of the present disclosure as defined by the appended claims.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

## Claims

1. A method comprising:
recognizing (410), using an electronic device (101), an external object; and
displaying (420) at least one text corresponding to a voice command corresponding to an application or function related to the external object, through a display functionally connected to the electronic device (101);
wherein the external object comprises a plurality of external objects comprising at least a first external object and a second external object;
the method **characterised in that**
when a first text that will be displayed in relation to the first external object and a second text that will be displayed in relation to the second external object are the same, the displaying of the at least one text comprises at least one of:
displaying a third text different from the first text as a text related to the first external object in addition to or in replacement of the first text; and
displaying a fourth text different from the second text as a text related to the second external object in addition to or in replacement of the second text.

2. The method of claim 1, wherein the recognizing of the external object comprises recognizing the external object, based on information acquired through at least one of a short-range communication module, a sensor module, or a camera module functionally connected to the electronic device.

3. The method of claim 1 or claim 2, wherein the recognizing of the external object further comprises:
acquiring information associated with the external object from at least one of an external device and a memory, wherein the memory is functionally connected to the electronic device; and
determining the at least one text, based on the associated information.

4. The method of claim 3, wherein the information associated with the external object comprises at least one of the at least one text, a location in which the at least one text will be displayed on the display, a size that will be displayed, a color that will be displayed, an image associated with the external object, and the application or function.

5. The method of any one of claims 1 to 4, wherein the displaying of the at least one text comprises displaying an identifier corresponding to the external object as at least a part of the at least one text.

6. The method of any one of claims 1 to 5, wherein the displaying of the at least one text comprises displaying a short voice command corresponding to the application or function, based on at least a part of the at least one text, and having a length shorter than that of the at least one text.

7. The method of any one of claims 1 to 6, wherein the recognizing of the external object comprises determining a short voice command for the at least one text corresponding to the application or function having syllables, the number of syllables being smaller than that of the voice command.

8. The method of any one of claims 1 to 7, wherein the external object comprises at least one of a virtual object and a real object.

9. The method of any one of claims 1 to 8, further comprising:
acquiring the voice command; and
providing the application or function in response to the voice command.

10. The method of claim 9, wherein the providing of the application or function comprises providing the application or function as one of a plurality of modes comprising at least a first mode and a second mode.

11. The method of claim 10, wherein the providing of the one mode comprises providing the one mode as one of the first mode and the second mode corresponding to an attribute of at least a part of the voice command, based on the attribute.

12. The method of claim 10, wherein the providing of the one mode comprises enlarging or reducing information that will be displayed on the display at a first magnification ratio or a first speed according to provision of the first application or function in the first mode, and may enlarge or reduce the information at a second magnification ratio or a second speed in the second mode.

13. An electronic device (101) comprising:
a display (150) configured to display information; and
an augmented reality module (170) comprising processing circuitry;
wherein the augmented reality module (170) is configured to recognize an external object (104) for the electronic device (101), and display at least one text corresponding to a voice command corresponding to an application or function related to the external object (104), through the display (150);
wherein the external object comprises a plurality of external objects comprising at least a first external object and a second external object;
the electronic device **characterised in that**
when a first text that will be displayed in relation to the first external object and a second text that will be displayed in relation to the second external object are the same, the displaying of the at least one text comprises at least one of:
displaying a third text different from the first text as a text related to the first external object in addition to or in replacement of the first text; and
displaying a fourth text different from the second text as a text related to the second external object in addition to or in replacement of the second text.

14. The electronic device of claim 13, further comprising a communication module (160), wherein, when the external object (104) corresponds to an external electronic device including a processor for providing a function, the augmented reality module (170) is configured to acquire information related to the external object from at least one of the external device connected through the communication module (160) and at least one external electronic device, and determine the at least one text, based on the related information.

15. The electronic device of claim 13 or claim 14, wherein the augmented reality module (170) is configured to provide the application or function in a first mode if an attribute of at least a part of the voice command is a first attribute, and provide the application or function in a second mode if an attribute of at least a part of the voice command is a second attribute.

16. A computer readable recording medium having written thereon a program for executing the operations of the method according to any one of claims 1 to 12.

## Patentansprüche

1. Verfahren, umfassend:
Erkennen (410), unter Verwendung einer elektronischen Vorrichtung (101), eines externen Objekts; und
Anzeigen (420) mindestens eines Textes, der einem Sprachbefehl entspricht, der einer Anwendung oder Funktion in Bezug auf das externe Objekt entspricht, über ein Display, das funktionell mit der elektronischen Vorrichtung (101) verbunden ist;
wobei das externe Objekt eine Vielzahl von externen Objekten umfasst, umfassend mindestens ein erstes externes Objekt und ein zweites externes Objekt;
wobei das Verfahren **dadurch gekennzeichnet ist, dass**
wenn ein erster Text, der in Bezug auf das erste externe Objekt angezeigt wird, und ein zweiter Text, der in Bezug auf das zweite externe Objekt angezeigt wird, gleich sind, die Anzeige des mindestens einen Textes mindestens eines der folgenden Elemente umfasst:
Anzeigen eines dritten Textes, der sich von dem ersten Text unterscheidet, als ein Text, der sich auf das erste externe Objekt bezieht, zusätzlich zu dem oder als Ersatz für den ersten Text; und
Anzeigen eines vierten Textes, der sich von dem zweiten Text unterscheidet, als ein Text, der sich auf das zweite externe Objekt bezieht, zusätzlich zu dem oder als Ersatz für den zweiten Text.

2. Verfahren nach Anspruch 1, wobei das Erkennen des externen Objekts ein Erkennen des externen Objekts basierend auf Informationen umfasst, die durch mindestens eines von einem Kurzstrecken-Kommunikationsmodul, einem Sensormodul oder einem Kameramodul, das funktional mit der elektronischen Vorrichtung verbunden ist, erfasst werden.

3. Verfahren nach Anspruch 1 oder Anspruch 2, wobei das Erkennen des externen Objekts ferner Folgendes umfasst:
Erfassen von Informationen, die mit dem externen Objekt assoziiert sind, von mindestens einem von einer externen Vorrichtung und einem Speicher, wobei der Speicher funktionell mit der elektronischen Vorrichtung verbunden ist; und
Bestimmen des mindestens einen Textes basierend auf den assoziierten Informationen.

4. Verfahren nach Anspruch 3, wobei die Informationen, die mit dem externen Objekt assoziiert sind, mindestens eines von dem mindestens einen Text, einer Position, an der der mindestens eine Text auf der Anzeige angezeigt wird, einer Größe, die angezeigt wird, einer Farbe, die angezeigt wird, einem Bild, das mit dem externen Objekt assoziiert ist, und der Anwendung oder Funktion umfassen.

5. Verfahren nach einem der Ansprüche 1 bis 4, wobei die Anzeige des mindestens einen Textes ein Anzeigen eines Identifikators, der dem externen Objekt entspricht, als mindestens ein Teil des mindestens einen Textes umfasst.

6. Verfahren nach einem der Ansprüche 1 bis 5, wobei die Anzeige des mindestens einen Textes ein Anzeigen eines kurzen, der Anwendung oder Funktion entsprechenden Sprachbefehls umfasst, der auf mindestens einem Teil des mindestens einen Textes basiert und kürzer als der mindestens eine Text ist.

7. Verfahren nach einem der Ansprüche 1 bis 6, wobei das Erkennen des externen Objekts ein Bestimmen eines kurzen Sprachbefehls für den mindestens einen Text umfasst, der der Anwendung oder Funktion entspricht, der Silben aufweist, wobei die Anzahl der Silben kleiner ist als die des Sprachbefehls.

8. Verfahren nach einem der Ansprüche 1 bis 7, wobei das externe Objekt mindestens eines von einem virtuellen Objekt und einem realen Objekt umfasst.

9. Verfahren nach einem der Ansprüche 1 bis 8, ferner umfassend:
Erfassen des Sprachbefehls; und
Bereitstellen der Anwendung oder Funktion als Reaktion auf den Sprachbefehl.

10. Verfahren nach Anspruch 9, wobei das Bereitstellen der Anwendung oder Funktion ein Bereitstellen der Anwendung oder Funktion als einen einer Vielzahl von Modi umfasst, umfassend mindestens einen ersten Modus und einen zweiten Modus.

11. Verfahren nach Anspruch 10, wobei das Bereitstellen des einen Modus ein Bereitstellen des einen Modus als einen von dem ersten Modus und dem zweiten Modus umfasst, der einem Attribut von mindestens einem Teil des Sprachbefehls entspricht, basierend auf dem Attribut.

12. Verfahren nach Anspruch 10, wobei das Bereitstellen des einen Modus ein Vergrößern oder Verkleinern von Informationen umfasst, die auf der Anzeige mit einem ersten Vergrößerungsverhältnis oder einer ersten Geschwindigkeit entsprechend der Bereitstellung der ersten Anwendung oder Funktion im ersten Modus angezeigt werden, und die Informationen mit einem zweiten Vergrößerungsverhältnis oder einer zweiten Geschwindigkeit in dem zweiten Modus vergrößern oder verkleinern kann.

13. Elektronische Vorrichtung (101), umfassend:
eine Anzeige (150), die zum Anzeigen von Informationen konfiguriert ist; und
ein Modul augmentierter Realität (170), umfassend eine Verarbeitungsschaltung;
wobei das Modul augmentierter Realität (170) konfiguriert ist, um ein externes Objekt (104) für die elektronische Vorrichtung (101) zu erkennen und mindestens einen Text, der einem Sprachbefehl entspricht, der einer Anwendung oder Funktion in Bezug auf das externe Objekt (104) entspricht, über die Anzeige (150) anzuzeigen;
wobei das externe Objekt eine Vielzahl von externen Objekten umfasst, umfassend mindestens ein erstes externes Objekt und ein zweites externes Objekt;
wobei die elektronische Vorrichtung **dadurch gekennzeichnet ist, dass**
wenn ein erster Text, der in Bezug auf das erste externe Objekt angezeigt wird, und ein zweiter Text, der in Bezug auf das zweite externe Objekt angezeigt wird, gleich sind, die Anzeige des mindestens einen Textes mindestens eines der folgenden Elemente umfasst:
Anzeigen eines dritten Textes, der sich von dem ersten Text unterscheidet, als ein Text, der sich auf das erste externe Objekt bezieht, zusätzlich zu dem oder als Ersatz für den ersten Text; und
Anzeigen eines vierten Textes, der sich von dem zweiten Text unterscheidet, als ein Text, der sich auf das zweite externe Objekt bezieht, zusätzlich zu dem oder als Ersatz für den zweiten Text.

14. Elektronische Vorrichtung nach Anspruch 13, ferner umfassend ein Kommunikationsmodul (160), wobei, wenn das externe Objekt (104) einer externen elektronischen Vorrichtung entspricht, die einen Prozessor zum Bereitstellen einer Funktion beinhaltet, das Modul augmentierter Realität (170) konfiguriert ist, um Informationen, die sich auf das externe Objekt beziehen, von der externen Vorrichtung, die über das Kommunikationsmodul (160) verbunden ist, und/oder von der mindestens einen externen elektronischen Vorrichtung erfasst und den mindestens einen Text basierend auf den zugehörigen Informationen zu bestimmen.

15. Elektronische Vorrichtung nach Anspruch 13 oder Anspruch 14, wobei das Modul augmentierter Realität (170) konfiguriert ist, um die Anwendung oder Funktion in einem ersten Modus bereitzustellen, wenn ein Attribut von mindestens einem Teil des Sprachbefehls ein erstes Attribut ist, und die Anwendung oder Funktion in einem zweiten Modus bereitzustellen, wenn ein Attribut von mindestens einem Teil des Sprachbefehls ein zweites Attribut ist.

16. Computerlesbares Aufzeichnungsmedium, auf dem ein Programm zum Ausführen der Vorgänge des Verfahrens nach einem der Ansprüche 1 bis 12 geschrieben ist.

## Revendications

1. Procédé comprenant :
la reconnaissance (410), au moyen d'un dispositif électronique (101), d'un objet externe ; et
l'affichage (420) d'au moins un texte correspondant à une commande vocale qui correspond à une application ou fonction liée à l'objet externe, par l'intermédiaire d'un dispositif d'affichage fonctionnellement connecté au dispositif électronique (101) ;
ledit objet externe comprenant une pluralité d'objets externes comprenant au moins un premier objet externe et un second objet externe ;
le procédé étant **caractérisé en ce que**
lorsqu'un premier texte qui sera affiché en lien avec le premier objet externe et un deuxième texte qui sera affiché en lien avec le second objet externe sont identiques, l'affichage dudit au moins un texte comprenant au moins l'un parmi :
l'affichage d'un troisième texte différent du premier texte en tant que texte lié au premier objet externe en plus ou en remplacement du premier texte ; et
l'affichage d'un quatrième texte différent du deuxième texte en tant que texte lié au second objet externe en plus ou en remplacement du deuxième texte.

2. Procédé selon la revendication 1, ladite reconnaissance de l'objet externe comprenant la reconnaissance de l'objet externe, sur la base d'informations acquises par l'intermédiaire d'au moins l'un parmi un module de communication à courte portée, un module de capteur ou un module de caméra fonctionnellement connecté au dispositif électronique.

3. Procédé selon la revendication 1 ou la revendication 2, ladite reconnaissance de l'objet externe comprenant en outre :
l'acquisition d'informations associées à l'objet externe à partir d'au moins l'un parmi un dispositif externe et une mémoire, la mémoire étant fonctionnellement connectée au dispositif électronique ; et
la détermination dudit au moins un texte, sur la base des informations associées.

4. Procédé selon la revendication 3, lesdites informations associées à l'objet externe comprenant au moins l'un parmi au moins un texte, un emplacement dans lequel ledit au moins un texte sera affiché sur le dispositif d'affichage, une taille qui sera affichée, une couleur qui sera affichée, une image associée à l'objet externe, et l'application ou la fonction.

5. Procédé selon l'une quelconque des revendications 1 à 4, ledit affichage dudit au moins un texte comprenant l'affichage d'un identifiant correspondant à l'objet externe au moins en tant que partie dudit au moins un texte.

6. Procédé selon l'une quelconque des revendications 1 à 5, ledit affichage dudit au moins un texte comprenant l'affichage d'une commande vocale courte correspondant à l'application ou à la fonction, sur la base d'au moins une partie dudit au moins un texte, et présentant une longueur plus courte que celle dudit au moins un texte.

7. Procédé selon l'une quelconque des revendications 1 à 6, ladite reconnaissance de l'objet externe comprenant la détermination d'une commande vocale courte pour ledit au moins un texte correspondant à l'application ou à la fonction qui comporte des syllabes, le nombre de syllabes étant inférieur à celui de la commande vocale.

8. Procédé selon l'une quelconque des revendications 1 à 7, ledit objet externe comprenant au moins l'un parmi un objet virtuel et un objet réel.

9. Procédé selon l'une quelconque des revendications 1 à 8, comprenant en outre :
l'acquisition de la commande vocale ; et
la fourniture de l'application ou de la fonction en réponse à la commande vocale.

10. Procédé selon la revendication 9, ladite fourniture de l'application ou de la fonction comprenant la fourniture de l'application ou de la fonction en tant que mode d'une pluralité de modes comprenant au moins un premier mode et un second mode.

11. Procédé selon la revendication 10, ladite fourniture dudit mode comprenant la fourniture du mode en tant que mode parmi le premier mode et le second mode correspondant à un attribut d'au moins une partie de la commande vocale, en fonction de l'attribut.

12. Procédé selon la revendication 10, ladite fourniture dudit mode comprenant l'agrandissement ou la réduction d'informations qui seront affichées sur le dispositif d'affichage à un premier taux d'agrandissement ou à une première vitesse selon la fourniture de la première application ou fonction dans le premier mode, et pouvant agrandir ou réduire les informations à un second taux d'agrandissement ou à une seconde vitesse dans le second mode.

13. Dispositif électronique (101) comprenant :
un dispositif d'affichage (150) configuré pour afficher des informations ; et
un module de réalité augmentée (170) comprenant des circuits de traitement ;
ledit module de réalité augmentée (170) étant configuré pour reconnaître un objet externe (104) pour le dispositif électronique (101), et afficher au moins un texte correspondant à une commande vocale qui correspond à une application ou fonction liée à l'objet externe (104), par l'intermédiaire du dispositif d'affichage (150) ;
ledit objet externe comprenant une pluralité d'objets externes comprenant au moins un premier objet externe et un second objet externe ;
ledit dispositif électronique étant **caractérisé en ce que**
lorsqu'un premier texte qui sera affiché en lien avec le premier objet externe et un deuxième texte qui sera affiché en lien avec le second objet externe sont identiques, l'affichage dudit au moins un texte comprenant au moins l'un parmi :
l'affichage d'un troisième texte différent du premier texte en tant que texte lié au premier objet externe en plus ou en remplacement du premier texte ; et
l'affichage d'un quatrième texte différent du deuxième texte en tant que texte lié au second objet externe en plus ou en remplacement du deuxième texte.

14. Dispositif électronique selon la revendication 13, comprenant en outre un module de communication (160), lorsque l'objet externe (104) correspond à un dispositif électronique externe comprenant un processeur pour fournir une fonction, le module de réalité augmentée (170) étant configuré pour acquérir des informations relatives à l'objet externe provenant d'au moins l'un parmi le dispositif externe connecté par l'intermédiaire du module de communication (160) et au moins un dispositif électronique externe, et déterminer ledit au moins un texte, sur la base des informations relatives.

15. Dispositif électronique selon la revendication 13 ou la revendication 14, ledit module de réalité augmentée (170) étant configuré pour fournir l'application ou la fonction dans un premier mode si un attribut d'au moins une partie de la commande vocale est un premier attribut, et fournir l'application ou la fonction dans un second mode si un attribut d'au moins une partie de la commande vocale est un second attribut.

16. Support d'enregistrement lisible par ordinateur sur lequel est écrit un programme pour exécuter les opérations du procédé selon l'une quelconque des revendications 1 à 12.
